(19) Europäisches Patentamt
European Patent Office
Office européen des brevets

(11) **EP 4 507 208 A1**

(12) **EUROPEAN PATENT APPLICATION**
published in accordance with Art. 153(4) EPC

(43) Date of publication:
**12.02.2025 Bulletin 2025/07**

(21) Application number: **23784372.7**

(22) Date of filing: **07.04.2023**

(51) International Patent Classification (IPC):
**H04B 7/0413** $^{(2017.01)}$    **H04B 7/024** $^{(2017.01)}$

(52) Cooperative Patent Classification (CPC):
**H04B 7/024; H04B 7/0413; H04B 7/06**

(86) International application number:
**PCT/CN2023/087097**

(87) International publication number:
**WO 2023/193810 (12.10.2023 Gazette 2023/41)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **08.04.2022 CN 202210366590**

(71) Applicant: **Datang Mobile Communications
Equipment Co., Ltd.
Beijing 100085 (CN)**

(72) Inventors:
• **HUANG, Qiuping
Beijing 100085 (CN)**
• **GAO, Qiubin
Beijing 100085 (CN)**
• **JIN, Liqiang
Beijing 100085 (CN)**

(74) Representative: **Studio Torta S.p.A.
Via Viotti, 9
10121 Torino (IT)**

(54) **CSI PROCESSING METHOD AND APPARATUS, DEVICE AND STORAGE MEDIUM**

(57)    The present disclosure provides a CSI processing method and apparatus, a device, and a storage medium. The terminal sends the first feedback information to a network device upon receiving the CSI feedback indication from the network device, thereby informing the network device of a current CSI feedback situation through the first feedback information. This enables the network device to adopt differentiated manners based on the first feedback information to obtain the CSI, thereby improving the reliability of the CSI feedback and ensuring the transmission performance of the system.

FIG. 3

## Description

The present disclosure claims priority to Chinese patent application No. 202210366590.4, filed with the China National Intellectual Property Administration on April 08, 2022, and entitled with "CSI PROCESSING METHOD AND APPARATUS, DEVICE AND STORAGE MEDIUM", the content of which is incorporated into the present disclosure by reference in its entirety.

## TECHNICAL FIELD

The present disclosure relates to the field of communication technologies and, in particular, to a CSI processing method and apparatus, a device and a storage medium.

## BACKGROUND

Massive MIMO (MIMO, Multiple-Input Multiple Output) technology is considered one of the core technologies for the next generation of mobile communication. The gain of MIMO systems is based on the accurate acquisition of channel state information (channel state information, CSI) by the base station, therefore, how to accurately obtain CSI is an urgent problem that needs to be solved today.

In related arts, the CSI is usually obtained through a codebook based manner, but in some scenarios, the CSI obtained by the UE may be inaccurate, which can affect the performance of downlink transmission.

## SUMMARY

The present disclosure provides a CSI processing method and apparatus, a device and a storage medium, which are used to obtain accurate CSI to ensure the performance of the downlink transmission.

In a first aspect, the present disclosure provides a CSI processing method, applied to a terminal, the CSI processing method includes: in response to receiving a CSI feedback indication sent by a network device, sending first feedback information to the network device; where the first feedback information includes at least one of the following:

information for indicating an acquisition manner of CSI feedback information; or
information for indicating accuracy of CSI feedback information; or
information for indicating first consistency information between channel related information and first information; or
information for indicating second consistency information between channel related information and first CSI; or
information for indicating whether CSI feedback information is transmitted.

In some implementations, the CSI processing method further includes: determining the first feedback information based on at least one of the CSI feedback information, the acquisition manner of the CSI feedback information, the accuracy of the CSI feedback information, the first consistency information, the second consistency information, and whether the CSI feedback information is transmitted.

In some implementations, the CSI processing method further includes: sending the CSI feedback information to the network device.

In some implementations, the CSI processing method further includes: determining second CSI based on the channel related information; and evaluating the second CSI to obtain the CSI feedback information and/or the first feedback information.

In some implementations, the determining the second CSI based on the channel related information includes: processing the channel related information using a first manner to obtain the second CSI;

the evaluating the second CSI to obtain the CSI feedback information and/or the first feedback information includes: processing the second CSI using a second manner corresponding to the first manner to obtain the first information; and determining the CSI feedback information and/or the first feedback information based on the channel related information and/or the first information.

In some implementations, the determining the CSI feedback information and/or the first feedback information based on the channel related information and/or the first information includes: determining the first consistency information based on the channel related information and the first information; and determining the CSI feedback information and/or the first feedback information based on the first consistency information.

In some implementations, determining the CSI feedback information based on the first consistency information includes: determining whether the CSI feedback information includes the first CSI and/or the second CSI based on the first consistency information, where the first CSI is obtained by processing the channel related information using a third manner.

In some implementations, the determining whether the CSI feedback information includes the first CSI and/or the second CSI based on the first consistency information includes at least one of the following:

in a case where a first condition is met, determining that the CSI feedback information includes the second CSI, where the first condition includes at least that: a value of the first consistency information belongs to a first range; or
in a case where a second condition is met, determining that the CSI feedback information includes the first CSI, where the second condition includes at least that: a value of the first consistency information belongs to a second range; or
in a case where a third condition is met, determining that the CSI feedback information includes the first CSI and the second CSI, where the third condition includes at least that: a value of the first consistency information belongs to a third range.

In some implementations, the determining the CSI feedback information and/or the first feedback information based on the channel related information and/or the first information includes: processing the channel related information using a third manner to obtain the first CSI; determining the first consistency information based on the channel related information and the first information; determining the second consistency information based on the channel related information and the first CSI; and determining the CSI feedback information and/or the first feedback information based on the first consistency information and the second consistency information.
In some implementations, determining the CSI feedback information based on the first consistency information and the second consistency information includes at least one of the following:

in a case where a fourth condition is met, determining that the CSI feedback information includes the second CSI, where the fourth condition includes at least that: the first consistency information and the second consistency information meet a first relative relationship; or
in a case where a fifth condition is met, determining that the CSI feedback information includes the first CSI, where the fifth condition includes at least that: the first consistency information and the second consistency information meet a second relative relationship; or
in a case where a sixth condition is met, determining that the CSI feedback information includes the first CSI and the second CSI, where the sixth condition includes at least that: the first consistency information and the second consistency information meet a third relative relationship.

In some implementations, the determining the first feedback information based on the first consistency information includes at least one of the following:

in a case where a first condition is met, determining that the first feedback information includes information for indicating that the CSI feedback information is obtained based on the first manner, where the first condition includes at least that: a value of the first consistency information belongs to a first range; or
in a case where a second condition is met, determining that the first feedback information includes information for indicating that the CSI feedback information is obtained based on the third manner, where the second condition includes at least that: a value of the first consistency information belongs to a second range; or
in a case where a third condition is met, determining that the first feedback information includes information for indicating that the CSI feedback information is obtained based on the first manner and the third manner, where the third condition includes at least that: a value of the first consistency information belongs to a second range;
determining the first feedback information based on the first consistency information and the second consistency information includes at least one of the following:

in a case where a fourth condition is met, determining that the first feedback information includes information for indicating that the CSI feedback information is obtained based on the first manner, where the fourth condition includes at least that: the first consistency information and the second consistency information meet the first relative relationship; or
in a case where a fifth condition is met, determining that the first feedback information includes information for indicating that the CSI feedback information is obtained based on the third manner, where the fifth condition includes at least that: the first consistency information and the second consistency information meet the second relative relationship; or
in a case where a sixth condition is met, determining that the first feedback information includes information for indicating that the CSI feedback information is obtained based on the first manner and the third manner, where the sixth condition includes at least that: the first consistency information and the second consistency information meet the third relative relationship.

In some implementations, the CSI processing method further includes: determining whether to send the CSI feedback information based on the first consistency information and/or the second consistency information.

In some implementations, the determining whether to send the CSI feedback information based on the first consistency information and/or the second consistency information includes: in a case where a seventh condition is met and/or an eighth condition is met, not sending the CSI feedback information, where the seventh condition includes at least that: the value of the first consistency information belongs to a fourth range, and the eighth condition includes at least that: the first consistency information and the second consistency information meet a fourth relative relationship.

In some implementations, the first consistency information includes: first similarity information and/or first error information; and the second consistency information includes: second similarity information and/or second error information.

In a second aspect, an embodiment of the present disclosure provides a CSI processing method, applied to a network device, and the CSI processing method includes:

sending a CSI feedback indication to a terminal;
obtaining first feedback information corresponding to the CSI feedback indication, where the first feedback information includes at least one of the following:

information for indicating an acquisition manner of CSI feedback information; or
information for indicating accuracy of CSI feedback information; or
information for indicating first consistency information between channel related information and first information; or
information for indicating second consistency information between channel related information and first CSI; or
information for indicating whether CSI feedback information is transmitted.

In some implementations, the CSI processing method further includes: receiving the CSI feedback information, where the acquisition manner of the CSI feedback information corresponds to an acquisition manner of CSI feedback information indicated by the first feedback information; or determining, based on the first feedback information, whether to receive the CSI feedback information.

In some implementations, the CSI processing method further includes: determining CSI based on the CSI feedback information and/or the first feedback information.

In some implementations, the CSI feedback information is determined based on channel related information and/or first information, the first information is obtained by processing second CSI using a second manner corresponding to a first manner, and the second CSI is obtained by processing the channel related information using the first manner.

In some implementations, the determining, based on the first feedback information, whether to receive the CSI feedback information includes at least one of the following:

in a case where the first feedback information indicates that the CSI feedback information is transmitted, and/or accuracy of the CSI feedback information indicated by the first feedback information meets a ninth condition, determining to receive the CSI feedback information, where the ninth condition includes at least that: the accuracy is first accuracy and/or second accuracy; or
in a case where the first feedback information indicates that the CSI feedback information is not transmitted, and/or accuracy of the CSI feedback information indicated by the first feedback information meets a tenth condition, determining not to receive the CSI feedback information, where the tenth condition includes at least that: the accuracy is third accuracy.

In some implementations, the determining the CSI based on the CSI feedback information and/or the first feedback information includes: determining the acquisition manner of the CSI feedback information based on the first feedback information; and obtaining the CSI using a manner corresponding to the acquisition manner.

In some implementations, the determining the CSI based on the CSI feedback information and/or the first feedback information includes: obtaining the accuracy of the CSI feedback information based on the first feedback information; determining the CSI based on the accuracy using at least one of the following manners: in a case where the accuracy is first accuracy, analyzing the CSI feedback information to obtain the CSI; or in a case where the accuracy is second accuracy, analyzing the CSI feedback information and calibrating at least a portion of information in an analysis result to obtain the CSI; or in a case where the accuracy is third accuracy, not analyzing the CSI feedback information to obtain the CSI.

In some implementations, the determining the CSI based on the CSI feedback information and/or the first feedback information includes: determining the first consistency information and/or the second consistency information based on the first feedback information; determining the acquisition manner of the CSI feedback information based on the first consistency information and/or the second consistency information; and obtaining the CSI using a manner corresponding to the acquisition manner.

In a third aspect, an embodiment of the present disclosure provides a CSI processing apparatus, applied to a terminal, the CSI processing apparatus includes: a sending module, configured to send first feedback information to a network device in response to receiving a CSI feedback indication sent by the network device; where the first feedback information includes at least one of the following:

information for indicating an acquisition manner of CSI feedback information; or
information for indicating accuracy of CSI feedback information; or
information for indicating first consistency information between channel related information and first information; or
information for indicating second consistency information between channel related information and first CSI; or
information for indicating whether CSI feedback information is transmitted.

In some implementations, the CSI processing apparatus further includes: a determination module, configured to determine the first feedback information based on at least one of CSI feedback information, the accuracy of CSI feedback information, first consistency information, second consistency information, and whether CSI feedback information is transmitted.

In some implementations, the sending module is further configured to send the CSI feedback information to the network device.

In some implementations, the CSI processing apparatus further includes: a determination module, configured to determine second CSI based on the channel related information; and an acquisition module, configured to evaluate the second CSI to obtain the CSI feedback information and/or the first feedback information.

In some implementations, the determination module is specifically configured to at least one of the following: process channel related information using a first manner to obtain a second CSI; and the acquisition module is specifically configured to: process the second CSI using a second manner corresponding to the first manner to obtain the first information; and determine the CSI feedback information and/or the first feedback information based on the channel related information and/or the first information.

In some implementations, the determination module is specifically configured to: determine the first consistency information based on the channel related information and the first information; and determine the CSI feedback information and/or the first feedback information based on the first consistency information.

In some implementations, the determination module is specifically configured to at least one of the following: determine whether the CSI feedback information includes the first CSI and/or the second CSI based on the first consistency information, where the first CSI is obtained by processing the channel related information using a third manner.

In some implementations, the determination module is specifically configured to:

in a case where a first condition is met, determine that the CSI feedback information includes the second CSI, where the first condition includes at least that: a value of the first consistency information belongs to a first range; or
in a case where a second condition is met, determine that the CSI feedback information includes the first CSI, where the second condition includes at least that: a value of the first consistency information belongs to a second range; or
in a case where a third condition is met, determine that the CSI feedback information includes the first CSI and the second CSI, where the third condition includes at least that: a value of the first consistency information belongs to a third range.

In some implementations, the determination module is specifically configured to: process the channel related information using a third manner to obtain the first CSI; determine the first consistency information based on the channel related information and the first information; determine the second consistency information based on the channel related information and the first CSI; and determine the CSI feedback information and/or the first feedback information based on the first consistency information and the second consistency information.

In some implementations, the determination module is specifically configured to:

in a case where a fourth condition is met, determine that the CSI feedback information includes the second CSI, where the fourth condition includes at least that: the first consistency information and the second consistency information meet a first relative relationship; or
in a case where a fifth condition is met, determine that the CSI feedback information includes the first CSI, where the fifth condition includes at least that: the first consistency information and the second consistency information meet a second relative relationship; or
in a case where a sixth condition is met, determine that the CSI feedback information includes the first CSI and the second CSI, where the sixth condition includes at least that: the first consistency information and the second consistency information meet a third relative relationship.

In some implementations, the determination module is specifically configured to: in a case where a first condition is met, determine that the first feedback information includes information for indicating that the CSI feedback information is obtained based on the first manner, where the first condition includes at least that: a value of the first consistency information belongs to a first range; or

in a case where a second condition is met, determine that the first feedback information includes information for indicating that the CSI feedback information is obtained based on the third manner, where the second condition includes at least that: a value of the first consistency information belongs to a second range; or

in a case where a third condition is met, determine that the first feedback information includes information for indicating that the CSI feedback information is obtained based on the first manner and the third manner, where the third condition includes at least that: a value of the first consistency information belongs to a second range;

in a case where a fourth condition is met, determine that the first feedback information includes information for indicating that the CSI feedback information is obtained based on the first manner, where the fourth condition includes at least that: the first consistency information and the second consistency information meet the first relative relationship; or

in a case where a fifth condition is met, determine that the first feedback information includes information for indicating that the CSI feedback information is obtained based on the third manner, where the fifth condition includes at least that: the first consistency information and the second consistency information meet the second relative relationship; or

in a case where a sixth condition is met, determine that the first feedback information includes information for indicating that the CSI feedback information is obtained based on the first manner and the third manner, where the sixth condition includes at least that: the first consistency information and the second consistency information meet the third relative relationship.

In some implementations, the determination module is further configured to determine whether to send the CSI feedback information based on the first consistency information and/or the second consistency information.

In some implementations, the determination module is further configured to: in a case where a seventh condition is met and/or an eighth condition is met, not send the CSI feedback information, where the seventh condition includes at least that: the value of the first consistency information belongs to a fourth range, and the eighth condition includes at least that: the first consistency information and the second consistency information meet a fourth relative relationship.

In some implementations, the first consistency information includes: first similarity information and/or first error information; and the second consistency information includes: second similarity information and/or second error information.

In a fourth aspect, an embodiment of the present disclosure provides a CSI processing apparatus, the CSI processing apparatus includes: a sending module, configured to send a CSI feedback indication to a terminal; and an acquisition module, configured to obtain first feedback information corresponding to the CSI feedback indication; where the first feedback information includes at least one of the following:

information for indicating an acquisition manner of CSI feedback information; or
information for indicating accuracy of CSI feedback information; or
information for indicating first consistency information between channel related information and first information; or
information for indicating second consistency information between channel related information and first CSI; or
information for indicating whether CSI feedback information is transmitted.

In some implementations, the CSI processing apparatus further includes: a receiving module or a first determination module, the receiving module is configured to receive the CSI feedback information, where the acquisition manner of the CSI feedback information corresponds to an acquisition manner of CSI feedback information indicated by the first feedback information; and the first determination module is configured to determine, based on the first feedback information, whether to receive the CSI feedback information.

In some implementations, the CSI processing apparatus further includes a second determination module, configured to determine CSI based on the CSI feedback information and/or the first feedback information.

In some implementations, the CSI feedback information is determined based on the channel related information and/or the first information, where the first information is obtained by processing the second CSI using a second manner corresponding to a first manner, and the second CSI is obtained by processing the channel related information using the first manner.

In some implementations, the first determination module is specifically configured to determine to receive the CSI feedback information in a case where the first feedback information indicates that the CSI feedback information is transmitted, and/or accuracy of the CSI feedback information indicated by the first feedback information meets a ninth condition, where the ninth condition includes at least that: the accuracy is first accuracy and/or second accuracy; or determine not to receive the CSI feedback information in a case where the first feedback information indicates that the CSI feedback information is not transmitted, and/or accuracy of the CSI feedback information indicated by the first feedback information meets a tenth condition, where the tenth condition includes at least that: the accuracy is third accuracy.

In some implementations, the second determination module is specifically configured to: determine the acquisition manner of the CSI feedback information based on the first feedback information; and obtain the CSI using a manner corresponding to the acquisition manner.

In some implementations, the second determination module is specifically configured to: obtain the accuracy of the CSI feedback information based on the first feedback information; determine the CSI based on the accuracy using at least one of the following manners:

in a case where the accuracy is first accuracy, analyze the CSI feedback information to obtain the CSI; or
in a case where the accuracy is second accuracy, analyze the CSI feedback information and calibrate at least a portion of information in an analysis result to obtain the CSI; or
in a case where the accuracy is third accuracy, not analyze the CSI feedback information to obtain the CSI.

In some implementations, the second determination module is specifically configured to: determine the first consistency information and/or the second consistency information based on the first feedback information; determine the acquisition manner of the CSI feedback information based on the first consistency information and/or the second consistency information; and obtain the CSI using a manner corresponding to the acquisition manner.

In a fifth aspect, an embodiment of the present disclosure provides a terminal, including:

a memory, configured to store a computer program;
a transceiver, configured to transmit and receive data under the control of a processor;
the processor, configured to read a computer program from the memory and perform the following operations:
in response to receiving a CSI feedback indication sent by a network device, sending first feedback information to the network device; where the first feedback information includes at least one of the following:

information for indicating an acquisition manner of the CSI feedback information; or
information for indicating accuracy of CSI feedback information; or
information for indicating first consistency information between channel related information and first information; or
information for indicating second consistency information between channel related information and first CSI; or
information for indicating whether CSI feedback information is transmitted.

In some implementations, the processor is further configured to: determine the first feedback information based on at least one of the CSI feedback information, the acquisition manner of the CSI feedback information, the accuracy of the CSI feedback information, the first consistency information, the second consistency information, and whether the CSI feedback information is transmitted.

In some implementations, the processor is further configured to: send the CSI feedback information to the network device.

In some implementations, the processor is further configured to: determine second CSI based on the channel related information; and evaluate the second CSI to obtain the CSI feedback information and/or the first feedback information.

In some implementations, determining the second CSI based on the channel related information includes: processing the channel related information using a first manner to obtain the second CSI;
evaluating the second CSI to obtain the CSI feedback information and/or the first feedback information includes: processing the second CSI based on a second manner corresponding to the first manner to obtain the first information; and determining the CSI feedback information and/or the first feedback information based on the channel related information and/or the first information.

In some implementations, the determining the CSI feedback information and/or the first feedback information based on the channel related information and/or the first information includes: determining the first consistency information based on the channel related information and the first information; and determining the CSI feedback information and/or the first feedback information based on the first consistency information.

In some implementations, determining the CSI feedback information based on the first consistency information includes: determining whether the CSI feedback information includes the first CSI and/or the second CSI based on the first consistency information, where the first CSI is obtained by processing the channel related information using a third manner.

In some implementations, the determining whether the CSI feedback information includes the first CSI and/or the second CSI based on the first consistency information includes at least one of the following: in a case where a first condition is met, determining that the CSI feedback information includes the second CSI, where the first condition includes at least that: a value of the first consistency information belongs to a first range; or

in a case where a second condition is met, determining that the CSI feedback information includes the first CSI, where the second condition includes at least that: a value of the first consistency information belongs to a second range; or in a case where a third condition is met, determining that the CSI feedback information includes the first CSI and the second CSI, where the third condition includes at least that: a value of the first consistency information belongs to a third range.

In some implementations, the determining the CSI feedback information and/or the first feedback information based on the channel related information and/or the first information includes: processing the channel related information using a third manner to obtain the first CSI; obtaining the first consistency information between the channel related information and the first information; obtaining the second consistency information between the channel related information and the first CSI; and determining the CSI feedback information and/or the first feedback information based on the first consistency information and the second consistency information.

In some implementations, determining the CSI feedback information based on the first consistency information and the second consistency information includes at least one of the followings: in a case where a fourth condition is met, determining that the CSI feedback information includes the second CSI, where the fourth condition includes at least that: the first consistency information and the second consistency information meet a first relative relationship; or

in a case where a fifth condition is met, determining that the CSI feedback information includes the first CSI, where the fifth condition includes at least that: the first consistency information and the second consistency information meet a second relative relationship; or in a case where a sixth condition is met, determining that the CSI feedback information includes the first CSI and the second CSI, where the sixth condition includes at least that: the first consistency information and the second consistency information meet a third relative relationship.

In some implementations, the processor is further configured to: in a case where a first condition is met, determine that the first feedback information includes information for indicating that the CSI feedback information is obtained using the first manner, where the first condition includes at least that: a value of the first consistency information belongs to a first range; or

in a case where a second condition is met, determine that the first feedback information includes information for indicating that the CSI feedback information is obtained using the third manner, where the second condition includes at least that: a value of the first consistency information belongs to a second range; or in a case where a third condition is met, determine that the first feedback information includes information for indicating that the CSI feedback information is obtained using the first manner and the third manner, where the third condition includes at least that: a value of the first consistency information belongs to a second range; in a case where a fourth condition is met, determine that the first feedback information includes information for indicating that the CSI feedback information is obtained using the first manner, where the fourth condition includes at least that: the first consistency information and the second consistency information meet a first relative relationship; or in a case where a fifth condition is met, determine that the first feedback information includes information for indicating that the CSI feedback information is obtained using the third manner, where the fifth condition includes at least that: the first consistency information and the second consistency information meet a second relative relationship; or in a case where a sixth condition is met, determine that the first feedback information includes information for indicating that the CSI feedback information is obtained using the first manner and the third manner, where the sixth condition includes at least that: the first consistency information and the second consistency information meet a third relative relationship.

In some implementations, the processor is further configured to: determine whether to send the CSI feedback information based on the first consistency information and/or the second consistency information.

In some implementations, determining whether to send the CSI feedback information based on the first consistency information and/or the second consistency information includes: in a case where a seventh condition is met and/or an eighth condition is met, not sending the CSI feedback information, where seventh condition includes at least that: the value of the first consistency information belongs to a fourth range, and the eighth condition includes at least that: the first consistency information and the second consistency information meet a fourth relative relationship.

In some implementations, the first consistency information includes: first similarity information and/or first error information; and the second consistency information includes: second similarity information and/or second error information.

In a sixth aspect, an embodiment of the present disclosure provides a network device, including: a memory, configured to store a computer program; a transceiver, configured to transmit and receive data under the control of a processor; and the processor, configured to read a computer program from the memory and perform the following operations: sending a CSI feedback indication to a terminal; and obtaining a first feedback information corresponding to the CSI feedback indication; where the first feedback information includes at least one of the following:

information for indicating an acquisition manner of CSI feedback information; or
information for indicating accuracy of CSI feedback information; or
information for indicating first consistency information between channel related information and first information; or
information for indicating second consistency information between channel related information and first CSI; or
information for indicating whether CSI feedback information is transmitted.

In some implementations, the processor is further configured to: receive the CSI feedback information, where the acquisition manner of the CSI feedback information corresponds to the acquisition manner of CSI feedback information indicated by the first feedback information; or determine, based on the first feedback information, whether to receive the CSI feedback information.

In some implementations, the processor is further configured to: determine CSI based on the CSI feedback information and/or the first feedback information.

In some implementations, the CSI feedback information is determined based on channel related information and/or first information, where the first information is obtained by processing second CSI using a second manner corresponding to the first manner, and the second CSI is obtained by processing the channel related information using the first manner.

In some implementations, determining, based on the first feedback information, whether to receive the CSI feedback information includes at least one of the following: in a case where the first feedback information indicates that the CSI feedback information is transmitted, and/or accuracy of the CSI feedback information indicated by the first feedback information meets a ninth condition, determining to receive the CSI feedback information, where the ninth condition includes at least that: the accuracy is first accuracy and/or second accuracy; or

in a case where the first feedback information indicates that the CSI feedback information is not transmitted, and/or accuracy of the CSI feedback information indicated by the first feedback information meets a tenth condition, determining not to receive the CSI feedback information, where the tenth condition includes at least that: the accuracy is third accuracy.

In some implementations, determining the CSI based on the CSI feedback information and/or the first feedback information includes: determine the acquisition manner of the CSI feedback information based on the first feedback information; and obtaining the CSI using a manner corresponding to the acquisition manner.

In some implementations, determining CSI based on the CSI feedback information and/or the first feedback information includes: obtaining the accuracy of the CSI feedback information based on the first feedback information; and determining the CSI based on the accuracy using at least one of the following manners: in a case where the accuracy is first accuracy, analyze the CSI feedback information to obtain the CSI; or

in a case where the accuracy is second accuracy, analyze the CSI feedback information and calibrate at least a portion of information in an analysis result to obtain the CSI; or
in a case where the accuracy is third accuracy, not analyze the CSI feedback information to obtain the CSI.

In some implementations, determining the CSI based on the CSI feedback information and/or the first feedback information includes: determining the first consistency information and/or the second consistency information based on the first feedback information; determining the acquisition manner of the CSI feedback information based on the first consistency information and/or the second consistency information; and obtaining the CSI using a manner corresponding to the acquisition manner.

In a seventh aspect, an embodiment of the present disclosure provides a processor readable storage medium, the processor readable storage medium stores a computer program, the computer program is configured to enable the processor to execute a packet forwarding method in the first aspect.

In an eighth aspect, an embodiment of the present disclosure provides a computer program product, including: a computer program, the computer program, when executed by a processor, implements a packet forwarding method in the first aspect.

In a ninth aspect, an embodiment of the present disclosure provides a communication system, including the terminal as described in the fifth aspect and the network device as described in the sixth aspect.

The present disclosure provides a CSI processing method and apparatus, a device, and a storage medium. The terminal sends the first feedback information to a network device upon receiving the CSI feedback indication from the network device, thereby informing the network device of a current CSI feedback situation through the first feedback information. This enables the network device to adopt different manners based on the first feedback information to obtain the CSI, thereby improving the reliability of the CSI feedback process and ensuring the transmission performance of the system.

It should be understood that the content described in the above disclosure content section is not intended to limit key or important features of the embodiments of the present disclosure, nor is it intended to limit a scope of the disclosure. The other features in the disclosure will become easily understood through the following description.

## BRIEF DESCRIPTION OF DRAWINGS

FIG. 1 is a schematic diagram of an application scenario provided in an embodiment of the present disclosure.
FIG. 2 is a schematic structural diagram of an auto-encoder provided in an embodiment of the present disclosure.
FIG. 3 is a first schematic diagram of a signaling interaction of a CSI processing method provided in an embodiment of the present disclosure.
FIG. 4 is a second schematic diagram of a signaling interaction of a CSI processing method provided in an embodiment of the present disclosure.
FIG. 5 is a first schematic flowchart of a CSI evaluation method provided in an embodiment of the present disclosure.
FIG. 6(a) is a first schematic principle of a CSI evaluation method provided in an embodiment of the present disclosure.
FIG. 6(b) is a second schematic principle of a CSI evaluation method provided in an embodiment of the present disclosure.
FIG. 7 is a second schematic flowchart of a CSI evaluation method provided in an embodiment of the present disclosure.
FIG. 8 is a third schematic diagram of a signaling interaction of a CSI processing method provided in an embodiment of the present disclosure.
FIG. 9 is a first schematic structural diagram of a CSI processing apparatus provided in an embodiment of the present disclosure.
FIG. 10 is a second schematic structural diagram of a CSI processing apparatus provided in an embodiment of the present disclosure.
FIG. 11 is a schematic structural diagram of a terminal provided in an embodiment of the present disclosure.
FIG. 12 is a schematic structural diagram of a network device provided in an embodiment of the present disclosure.

## DESCRIPTION OF EMBODIMENTS

The term "and/or" in the present disclosure describes the association relationship between associated objects, and indicate that there can be three types of relationships. For example, A and/or B, which can represent three situations: A exists alone, A and B exist simultaneously, and B exists alone. The character '/' generally indicates that the associated objects before and after the character is an 'or' relationship. The term 'multiple' in embodiments of the present disclosure refers to two or more, other quantifiers is similar as it.

The following will provide a clear and complete description of the technical solution in an embodiment of the present disclosure in conjunction with the accompanying drawings in an embodiment of the present disclosure. Obviously, the described embodiments are only a part of embodiments of the present application and not all of them. Based on the embodiments in the present disclosure, all other embodiments obtained by ordinary skilled persons in this field without creative labor are within the protection scope of the present disclosure.

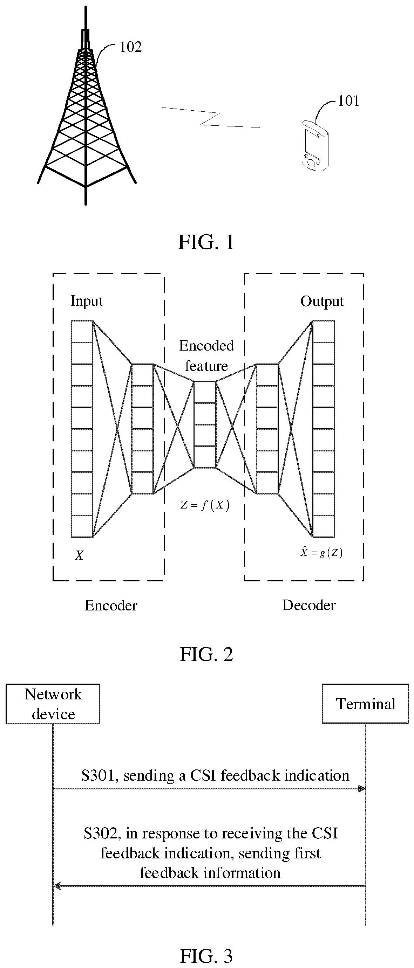

For the convenience of understanding, first, the application scenario of an embodiment of the present disclosure will be explained in conjunction with FIG. 1.

FIG. 1 is a schematic diagram of the application scenario provided in an embodiment of the present disclosure. As shown in FIG. 1, the scenario includes: a terminal 101 and a network device 102.

The above-mentioned terminal 101 can be a wireless terminal or a wired terminal. The wireless terminal can be a device that provides voice and/or other business data connectivity to users, a handheld device with wireless connectivity capabilities, or other processing devices connected to a wireless modem. The wireless terminal can communicate with one or more core network devices via a Radio Access Network (Radio Access Network, referred to as RAN). The wireless terminal can be a mobile terminal, such as a mobile phone (also known as a "cellular" phone) and a computer with a mobile terminal, such as a portable, pocket sized, handheld, computer built-in, or vehicle mounted mobile device, which exchange language and/or data with the RAN. For example, the wireless terminal can also be a personal communication service (Personal Communication Service, referred to as PCS) phone, a cordless phone, session initiation protocol (Session Initiation Protocol, referred to as SIP) phone, a wireless local loop (Wireless Local Loop, referred to as WLL) station, a personal digital assistant (Personal Digital Assistant, PDA), and other devices. The wireless terminal can also be referred to as a system, a subscriber unit (Subscriber Unit), a subscriber station (Subscriber Station), a mobile station (Mobile Station), a mobile (Mobile), a remote station (Remote Station), a remote terminal (Remote Terminal), an access terminal (Access terminal), a user terminal (User Terminal), a user agent (User Agent), a user device or a user equipment (User Device or User Equipment), without limitation. Optionally, the above-mentioned terminal 101 can also be a smart watch, tablet, or other device.

The above-mentioned network device 102 can be a base station, specifically a base transceiver station (Base Transceiver Station, referred to as BTS) and/or a base station controller in global system of mobile communication (Global System of Mobile Communication, referred to as GSM) or code division multiple access (Code Division Multiple Access, referred to as CDMA), a NodeB (NodeB, referred to as NB) and/or a radio network controller (Radio Network Controller, RNC) in wideband code division multiple access (Wideband Code Division Multiple Access, referred to as WCDMA), an evolutionary node B (Evolutionary Node B, referred to as 4G base station or eNB) in long term evolution (Long Term Evolution, referred to as LTE), or a relay station or access point, or a base station (5G base station ) in future 5G networks, and so on. The network device 102 in FIG. 1 is illustrated as a base station, which is not limited in the embodiments of the present disclosure.

In the field of wireless communication, the so-called Channel State Information (Channel State Information, CSI) is the channel attribute of the communication link, which describes the attenuation factor of the signal on each transmission path. The CSI can enable a communication system to adapt to a current channel condition, providing guarantee for high-reliability and high-speed communication in multi-antenna systems. The channel condition plays a decisive role in wireless communication, which makes it usually necessary to provide feedback on CSI in actual wireless communication systems.

There are various manners to obtain CSI in related arts, such as obtaining CSI based on 3GPP's Type I codebook and obtaining CSI based on 3GPP's Type II codebook. In recent years, some literature proposes using Artificial Intelligence (Artificial Intelligence, AI) technology to obtain CSI. The AI technology includes but is not limited to one or more of the following: a neural network technology, a machine learning technology, an encoding technology, a model training technology, a data driving technology, etc. Taking CSI feedback based on encoding technology as an example, an auto-encoder network can be used to implement it. The auto-encoder network usually consists of an encoder and a decoder. The encoder compresses input data based on the AI technology, and the decoder reconstructs the input based on the compression result.

As an example, FIG. 2 is a schematic structural diagram of an auto-encoder provided in an embodiment of the present disclosure. As shown in FIG. 2, the input data X is first compressed into $Z=f(X)$ by the encoder, and then the encoded feature Z is decoded to obtain $\hat{X}=g(Z)=g(f(X))$. The purpose is to reconstruct the input data X and then solve a mapping relationship between $f(\cdot)$ and $g(\cdot)$ through back propagation training, thereby minimizing a reconstruction error $L(\hat{X}, X)$. The encoder module and decoder module can be constructed based on a convolutional neural network, a fully connected neural network, a recursive neural network, etc., which is not limited in the embodiments of the present disclosure. It should be understood that as for other CSI feedback methods, they will not be listed one by one here.

However, due to complexity and variability of wireless communication systems, it cannot be guaranteed that the terminal will always have good performance based on one type of CSI feedback method. If this feedback method is not suitable for the current channel condition, but the terminal 101 still uses this feedback method to perform the CSI feedback, it will cause the network device 102 to obtain incorrect CSI, thereby affecting the performance of downlink transmission.

In view of this, an embodiment of the present disclosure provides a CSI processing method and apparatus, a device, and a storage medium, and sets up an evaluation mechanism. After processing a CSI input based on the above method and obtaining a CSI output, the terminal 101 first evaluates the CSI output based on the CSI input, and then determines feedback behavior of the CSI based on the evaluation situation. Through this scheme, differentiated CSI feedback behavior can be carried out based on the current channel condition, to improve the reliability of the CSI feedback and ensure transmission performance of the system.

It should be noted that the above FIG. 1 is illustrative, and other network devices or terminals may also be included in the above scenario, such as wireless relay devices and wireless backhaul devices (not shown in FIG. 1). The terminal 101 and the network device 102 in the above scenario are both illustrated as one, but not limited to this.

It should be understood that the technical solutions provided in embodiments of the present disclosure can be applied to various systems, especially 5G system, 6G system, and their evolved systems. For example, applicable systems may include a global system of mobile communication (Global System of Mobile Communication, GSM) system, a code division multiple access (Code Division Multiple Access, CDMA) system, a wideband code division multiple access (Wideband Code Division Multiple Access, WCDMA) system, a general packet radio service (General Packet Radio Service, GPRS) system, a long term evolution (Long Term Evolution, LTE) system, a LTE frequency division duplex (Frequency Division Duplex, FDD) system, LTE time division duplex (Time Division Duplex, TDD) system, a long term evolution advanced (Long Term Evolution Advanced, LTE-A) system, a universal mobile telecommunications system (Universal Mobile Telecommunications system, UMTS), a worldwide interoperability for microwave access (Worldwide Interoperability for Microwave Access, WiMAX) system, a 5G new radio (New Radio, NR) system, etc. All of these systems include terminals and network devices. The system also includes the core network part, such as an evolved packet system (Evolved Packet System, EPS), a 5G system (5GS), a 5G advanced system, etc.

The communication system to which the technical solution provided in the embodiment of the present disclosure includes a network device and a terminal, where the network device may include an access network device and a core network device, and the access network device may be a wireless access network device, etc.

It should be understood that the methods and devices provided in embodiment of the present disclosure are based on the same application concept. Since the principles of problem-solving by the methods and devices are similar, the implementation of the devices and methods can be referred to each other, and repetition will not be repeated.

Below is a detailed explanation of the technical solution of the embodiment of the present disclosure and how the technical solution of the present disclosure solves the above technical problems through the specific implementation. The following specific embodiments can be combined with each other, and the same or similar concepts or processes may not be repeated in some embodiments.

FIG. 3 is a first schematic diagram of a signaling interaction of a CSI processing method provided in an embodiment of the present disclosure. As shown in FIG. 3, the CSI processing method includes the following steps.

S301, the network device sends a CSI feedback indication to the terminal.

S302, in response to receiving the CSI feedback indication, the terminal sends first feedback information to the network device.

The first feedback information includes at least one of the following:

information for indicating an acquisition manner of CSI feedback information; or
information for indicating accuracy of CSI feedback information; or
information for indicating first consistency information between channel related information and first information; or
information for indicating second consistency information between channel related information and first CSI; or
information for indicating whether CSI feedback information is transmitted.

The information for indicating the first consistency information between the channel related information and the first information can be the first consistency information itself or a quantized value corresponding to the first consistency information. Similarly, the information for indicating the second consistency information between the channel related information and the first CSI can be the second consistency information itself or a quantized value corresponding to the second consistency information.

S303, the network device obtains the first feedback information corresponding to the CSI feedback indication.

It should be noted that categories of the channel related information are not specifically limited in the embodiments of the present disclosure. For example, the channel related information can be a downlink channel obtained by the terminal based on a downlink signal (such as channel state information reference signal (Channel State Information Reference Signal, CSI-RS)) or a synchronization signal/PBCH Block (Synchronization Signal/PBCH Block, SSB), etc. The PBCH is a physical broadcasting channel (Physical Broadcasting Channel).

In some optional embodiments, the channel related information may also be channel information obtained by preprocessing the downlink channel, including but is not limited to at least one of the following:

a channel after time-domain clipping; or
a channel and a channel characteristic obtained after extracting a characteristic from the downlink channel by the terminal; or
a channel characteristic vector, for example, can be obtained by performing singular value decomposition on the channel through a manner obtaining the channel characteristic vector; or
a channel amplitude characteristic and/or a channel phase characteristic; or
a time-domain characteristic of the channel and/or a frequency-domain characteristic of the channel and/or a spatial characteristic of the channel.

It should be understood that the downlink channel as described above can be a channel estimation value obtained by the terminal based on the downlink signal.

In some optional implementations, the CSI feedback information is determined based on the channel related information and/or the first information, the first information is obtained by processing a second CSI using a second manner corresponding to a first manner, and the second CSI is obtained by processing the channel related information using the first manner; the first CSI is obtained by processing the channel related information using a third manner.

The first manner includes but is not limited to at least one of the following: a data-driven technology and an AI technology (or, also known as a neural network technology, a data training technology, a machine learning technology, a coding technology, and a model training technology).

In an embodiment of the present disclosure, the first manner and the second manner have a corresponding relationship. For example, using the first manner to obtain the CSI is using the aforementioned AI-based encoder to obtain the CSI, using the second manner corresponding to the first manner to process the second CSI is specifically: processing the second CSI based on the decoder corresponding to the encoder. For another example, using the first manner to obtain the CSI is obtaining the CSI based on compressive sensing technology, using the second manner corresponding to the first manner to process the second CSI is specifically: using a CSI recovery algorithm corresponding to the compressive sensing technology of the first manner to process the second CSI. As for specific categories of the first manner and second manner, as well as a specific category of the third manner, the embodiment of the present disclosure is not specifically limited. As an example, the third manner can be a codebook-based manner, such as a Type I codebook-based manner or a Type II codebook-based manner, etc. Optionally, the third manner is an AI-based manner that is different from the first manner. For example, the third manner and the first manner correspond to different AI algorithms or different parameters.

In some optional implementations, the network device can obtain the CSI of the terminal in different manners according to the content indicated in the first feedback information. As for the specific manner in which the network device obtains the CSI, it will be shown in the subsequent embodiments.

In the embodiment of the present disclosure, the terminal sends the first feedback information to a network device upon receiving the CSI feedback indication from the network device, thereby informing the network device of a current CSI feedback situation through the first feedback information. This enables the network device to adopt different manners based on the first feedback information to obtain the CSI differentially, thereby improving the reliability of CSI feedback and ensuring the transmission performance of the system.

In some embodiments, the first feedback information is obtained based on at least one of the CSI feedback information, the accuracy of CSI feedback information, the first consistency information, the second consistency information, and whether the CSI feedback information is transmitted. As for the acquisition manner of the CSI feedback information, it will be shown in subsequent embodiments.

In some possible embodiments, a transmission status of the CSI feedback information can be indicated by a signal transmission status on a resource used for transmitting the first feedback information. As an example, the first feedback information can be characterized by no signal transmission on the resource to indicate that the CSI feedback information is not transmitted, and the first feedback information can be characterized by signal transmission on the resource to indicate that the CSI feedback information is transmitted. That is to say, in the embodiment of the present disclosure, in a case where the network device receives a resource for transmitting the first feedback information, if it is determined that there is no signal transmission on the resource, it means that the terminal is not currently transmitting the CSI feedback information; correspondingly, if it is determined that there is signal transmission on the resource, it means that the terminal is currently transmitting CSI feedback information to the network device. As for how the network device determines that there is no signal transmission on the resource, the embodiment of the present disclosure is not specifically limited.

In some possible examples, the network device can also measure the received power on the resource and determine whether there is signal transmission based on the received power. Specifically, if the received power is less than a certain threshold value, it is considered that there is no signal transmission.

For another example, the network device can also verify signals on the resource and determine whether there is signal transmission based on the verification results. As an example, the network device can perform CRC (Cyclic Redundancy Check) on the signal on the resource. If the check fails, it is considered that there is no signal transmission. It should be noted that a size of the threshold value is not specifically limited in the embodiment of the present disclosure.

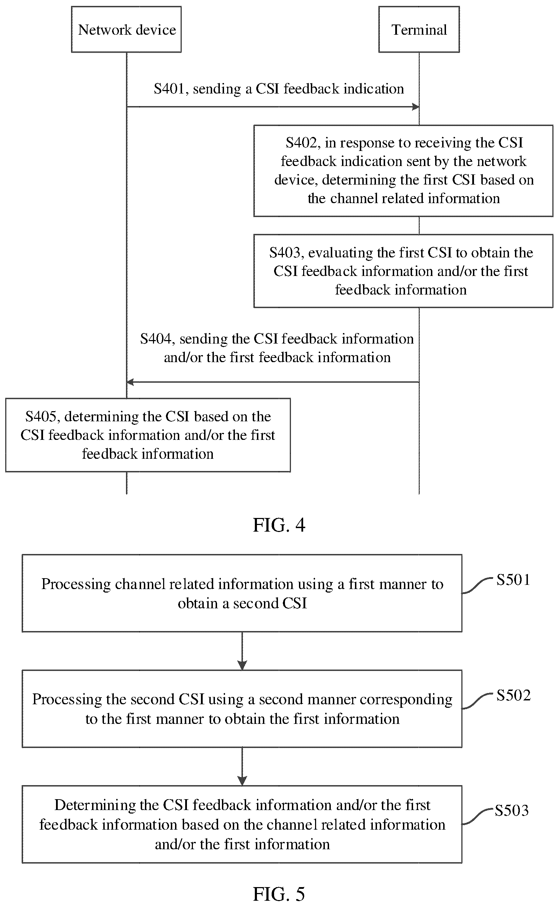

In some embodiments, in a case where it is determined that the CSI feedback information needs to be sent to network devices, the CSI feedback information can also be sent to the network device. Next, with reference to the embodiment shown in FIG. 4, the acquisition manner of the CSI feedback information will be explained in detail. FIG. 4 is a second schematic diagram of a signaling interaction of a CSI processing method provided in an embodiment of the present disclosure. As shown in FIG. 4, the CSI processing method includes the following steps.

S401, the network device sends a CSI feedback indication to the terminal.

S402, in response to receiving the CSI feedback indication sent by the network device, the terminal determines the second CSI based on the channel related information.

Taking that the first manner is the encoding technology as an example, in the embodiment of the present disclosure, the channel related information can be input into a pre-trained encoder to obtain the second CSI.

In some optional implementations, other modules can also be used to process the channel related information, such as a quantizer, a channel preprocessing module, etc., where the channel preprocessing module is used for clipping or feature extraction of the channel related information. It should be noted that the specific method of obtaining the second CSI based on the encoding technology can refer to the prior art, and will not be explained in detail here.

S403, the terminal evaluates the second CSI to obtain the CSI feedback information and/or the first feedback information.

It should be understood that there are multiple evaluation manners when evaluating the second CSI, and the embodiment of the present disclosure is not specifically limited. For example, on one hand, a neural network model can be used to evaluate the second CSI.

On the other hand, the second manner corresponding to the first manner can be used to process the obtained second CSI, and a processing result can be compared with the channel related information to obtain an evaluation result of the second CSI based on consistency between the processing result and the channel related information. As an example, if the consistency between the processing result and the channel related information is higher, it indicates that the accuracy of the second CSI is higher; correspondingly, if the consistency between the processing result and the channel related information is lower, it indicates that the accuracy of the second CSI is lower. As for a specific evaluation manner, it will be shown in the subsequent embodiments. It should be noted that the CSI feedback information obtained varies depending on the evaluation results. As an example, if the accuracy of the second CSI is high, the CSI feedback information may include the second CSI. Optionally, the first feedback information can be used to indicate that current CSI feedback information is obtained using the first manner.

Correspondingly, if the accuracy of the second CSI is low, the CSI feedback information may not be sent to the network device, and the first feedback information indicating that the CSI feedback information is not transmitted is sent to the network device; alternatively, the CSI feedback information is sent to the network device and the first feedback information indicating the accuracy of the CSI feedback information is sent to the network device; alternatively, the first CSI obtained by processing the channel related information using a third manner can also be sent to the network device. As for the specific determination method of the CSI feedback information and the first feedback information, it will be shown in the subsequent embodiments.

S404, the terminal sends the CSI feedback information and/or the first feedback information to the network device.

S405, the network device determines the CSI based on the CSI feedback information and/or the first feedback information.

Correspondingly, after receiving the CSI feedback information and/or the first feedback information, the network device can determine the acquisition manner of the CSI based on the first feedback information.

As an example, if the first feedback information is used to indicate that the accuracy of the CSI feedback information is high, the CSI feedback information is determined to be a final CSI. If the first feedback information is used to indicate that the accuracy of the CSI feedback information is low, the CSI feedback information may not be obtained, or the CSI feedback information may be obtained and calibrated to obtain the CSI.

Alternatively, if the first feedback information is used to indicate the acquisition manner of the CSI feedback information, the CSI can be obtained based on the acquisition manner.

In some optional implementations, if the first feedback information is used to indicate that the CSI feedback information is not transmitted, the CSI feedback information will no longer be obtained; optionally, the network device can obtain the CSI through other means. For example, the network device can use the CSI fed back from the terminal in the last time as the current CSI. For another example, the network device can also process CSI fed back from the terminal in the past time instant to obtain the current CSI. The specific processing method may include but is not limited to channel prediction, channel difference, etc., and the present embodiment is not limited.

In the embodiment of the present disclosure, after determining the second CSI based on the channel related information, the terminal first evaluates the second CSI, and then determines the feedback behavior of the CSI based on the evaluation result, so as to provide differentiated CSI feedback according to the current channel condition, which can improve the reliability of the CSI feedback and ensure the transmission performance of the system.

Next, in conjunction with specific embodiments, a detailed explanation will be given on the implementation of evaluating the first CSI in S403 mentioned above.

In a first optional evaluation manner, FIG. 5 is a first schematic flowchart of a CSI evaluation method provided in an embodiment of the present disclosure. It should be noted that an execution body of the present embodiment can be the terminal in the above scenario. As shown in FIG. 5, the CSI evaluation process may include the following steps.

S501, processing the channel related information using a first manner to obtain a second CSI.

S502, processing the second CSI using a second manner corresponding to the first manner to obtain the first information.

S503, determining the CSI feedback information and/or the first feedback information based on the channel related information and/or the first information.

It should be noted that for specific types of the first and second manners, as well as processing procedures using the first and second manners, reference can be made to the above embodiments, which will not be repeated here.

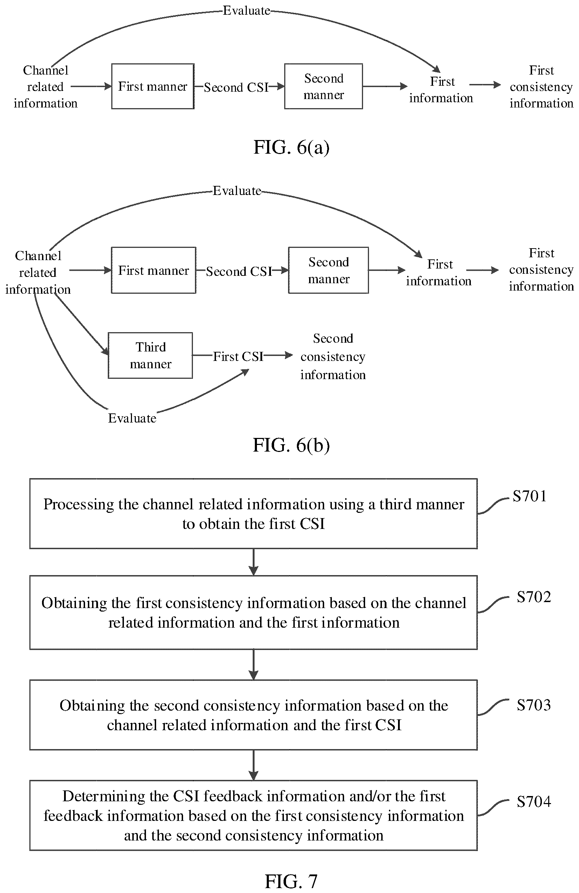

FIG. 6(a) is a first schematic principle of a CSI evaluation method provided in an embodiment of the present disclosure. As shown in FIG. 6 (a), in a first optional implementation, an evaluation of the second CSI can be achieved based on the first consistency information between the channel related information and the first information, and then the CSI feedback information and/or the first feedback information can be determined.

Specifically, the aforementioned S503 includes the following steps:

(1) obtaining the first consistency information between the channel related information and the first information.
(2) determining the CSI feedback information and/or the first feedback information based on the first consistency information.

When determining the CSI feedback information and/or the first feedback information based on the first consistency information, it specifically includes determining whether the CSI feedback information includes the first CSI and/or the second CSI based on the first consistency information.

In some optional embodiments, the information for indicating the first consistency information between the channel related information and the first information may be the first consistency information itself.

The first consistency information includes: first similarity information and/or first error information between the channel related information and the first information, where the first similarity can be the cosine similarity between the channel related information and the first information; the first error information can be the normalized mean square error (Normalized Mean Square Error, NMSE) or mean square error (Mean Square Error, NMSE) between the channel related information and the first information.

Specifically, when the CSI feedback information is determined, it includes but is not limited to any one or more of the following situations.

(1) In a case where a first condition is met, determining that the CSI feedback information includes the second CSI, where the first condition includes at least that: a value of the first consistency information belongs to a first range.
(2) In a case where a second condition is met, determining that the CSI feedback information includes the first CSI, where the second condition includes at least that: a value of the first consistency information belongs to a second range.
(3) In a case where a third condition is met, determining that the CSI feedback information includes the first CSI and the second CSI, where the third condition includes at least that: a value of the first consistency information belongs to a third range.

It should be understood that different types of the first consistency information correspond to different conditions. Next, taking the first consistency information as the first similarity information and the first error information as examples respectively, a determination manner of the CSI feedback information will be exemplarily illustrated.

It should be noted that in the embodiment of the present disclosure, there are no specific limitations on the specific values of the first and second ranges.

In a first example, in the case where the first consistency information is the first similarity information between the channel related information and the first information, taking the first similarity as the cosine similarity as an example, a value $\rho 1$ of the first similarity information is first obtained based on the following formula (1):

$$\rho 1 = \frac{|V'^H V|}{\|V'\|_2 \|V\|_2} \qquad (1)$$

where, V' is the first information, and V is the channel related information.

As an example, the cosine similarity can be generalized cosine similarity (GCS) or squared generalized cosine similarity (SGCS).

The GCS can be represented based on the following formula (2):

$$GCS = E\left\{\frac{1}{N}\sum_{i=1}^{N} \frac{\|\widetilde{w}_i^H w_i\|}{\|\widetilde{w}_i\| \, \|w_i\|}\right\} \qquad (2)$$

where, $w_i$ is the CSI with an input frequency unit i, $\widetilde{w}_i$ is the first consistency information, N is a total number of frequency units, and E{·} is the average operation.

The SGCS can be represented based on the following formula (3):

$$SGCS = E\left\{\frac{1}{N}\sum_{i=1}^{N} \left(\frac{\|\widetilde{w}_i^H w_i\|}{\|\widetilde{w}_i\| \, \|w_i\|}\right)^2\right\} \qquad (3)$$

similarly, $w_i$ is the CSI with an input frequency unit i, $\tilde{w}_i$ is the first consistency information, N is a total number of frequency units, and E{·} is the average operation.

The normalized mean square error (NMSE) can be calculated based on the following formula (4):

$$\text{NMSE} = \text{E}\{\frac{\|\tilde{H}-H\|^2}{\|H\|^2}\} \qquad (4)$$

where, H is the input CSI/matrix, $\tilde{H}$ is the input CSI/matrix, and E{·} is the average operation.

As an optional implementation, a range to which the value ρ1 of the first consistency information belongs is determined, and the current satisfied condition is determined based on the range to which ρ1 belongs. It should be noted that in the case where the first consistency information is the first similarity information, if the value of the first similarity information is larger, it indicates that the similarity between the channel related information and the first information is higher, and it also indicates that the CSI feedback performance using the first manner is better.

As an example, a first threshold value R1 and a second threshold value R2 can be preset, and the range of values greater than R1 is the first range; the range of values less than R2 is the second range; the range of values less than R1 and greater than R2 is the third range, where R1 is greater than or equal to R2.

It should be noted that the first range, the second range, and the third range can be set according to requirements, and the above examples are not intended as a limitation. For example, the first range can be set to a value part greater than or equal to R1, or the second range can be set to a value part less than or equal to R2, etc., which will not be listed one by one here.

In an embodiment of the present disclosure, in a first aspect, in a case where the value ρ1 of the first consistency information is determined to be greater than R1 (i.e., the first condition is met), it is determined that the similarity between the channel related information and the first information is high, that is, the CSI feedback performance using the first manner is good. At this time, it is determined that the CSI feedback information includes the second CSI.

In a second aspect, in a case where the value ρ1 of the first consistency information is less than R2 (i.e., the second condition is met), it is determined that the similarity between the channel related information and the first information is low, that is, the CSI feedback performance using the first manner is poor. At this time, it is determined that the CSI feedback information includes the first CSI.

In a third aspect, in a case where the value ρ1 of the first consistency information is determined to be less than R1 and greater than R2 (i.e., the third condition is met), it is determined that the similarity between the channel related information and the first information is moderate, that is, the CSI feedback performance using the first manner is moderate. At this time, it is determined that the CSI feedback information includes the first CSI and the second CSI.

In a second example, in the case where the first consistency information is the first error information between the channel related information and the first information, a normalized mean squared error (Normalized Mean Squared Error, NMSE) operation or a mean squared error (Mean Squared Error, MSE) operation is performed first on the first consistency information as the channel related information, in order to obtain the value γ1 of the first error information.

As an optional implementation, the range to which γ1 belongs is determined and the current satisfied condition is determined based on the range to which γ1 belongs. It should be noted that in the case where the first consistency information is the first error information, if the value of the first error information is smaller, it indicates that the similarity between the channel related information and the first information is higher, and it also indicates that the CSI feedback performance using the first manner is better.

As an example, a third threshold value R3 and a fourth threshold value R4 can be preset, and the range of values less than R4 is the first range; the range of values greater than R3 is the second range; the range of values less than R3 and greater than R4 is the third range, where R3 is greater than or equal to R4.

It should be noted that the first range, second range, and third range can be set according to the requirements, and the above examples are not intended as a limitation. For example, the first range can be set to the value part less than or equal to R4, or the second range can be set to the value part greater than or equal to R3, etc., which will not be listed one by one here.

In an embodiment of the present disclosure, in a first aspect, in a case where the value γ1 of the first error information is determined to be less than R4 (i.e., the first condition is met), it is determined that the similarity between the channel related information and the first information is high, that is, the CSI feedback performance using the first manner is good. At this time, it is determined that the CSI feedback information includes the second CSI.

In a second aspect, in a case where the value γ1 of the first error information is greater than R3 (i.e., the second condition is met), it is determined that the similarity between the channel related information and the first information is low, that is, the CSI feedback performance using the first manner is poor. At this time, it is determined that the CSI feedback information includes the first CSI.

In a third aspect, in a case where the value γ1 of the first error information is determined to be greater than R3, less than R3 and less than R4 (i.e., the third condition is met), it is determined that the similarity between the channel related information and the first information is moderate, that is, the CSI feedback performance using the first manner is moderate. At this time, it is determined that the CSI feedback information includes the first CSI and the second CSI.

In some optional implementations, the first feedback information can also be determined based on whether the CSI feedback information includes the first CSI and/or the second CSI.

As an example, if the CSI feedback information includes the first CSI, the first feedback information may indicate that the acquisition manner of the CSI feedback information is the third manner.

For another example, if the CSI feedback information includes a second CSI, the first feedback information may indicate that the acquisition manner of the CSI feedback information is the first manner.

For another example, if the CSI feedback information includes the first CSI and the second CSI, the first feedback information may indicate that the acquisition manner of the CSI feedback information is to adopt the first manner and the third manner.

In some optional embodiments, the information for indicating the first consistency information between the channel related information and the first information may also be a quantized value of the first similarity information and/or a quantized value of the first error information. As for the acquisition manner of the quantized value, the embodiment of the present disclosure is not specifically limited.

As an example, taking the first consistency information as the cosine similarity between the channel related information and the first information as an example, the information for indicating the first consistency information between the channel related information and the first information is a quantized value of the cosine similarity. Specifically, after obtaining the cosine similarity between the channel related information and the first information through the above manner, the corresponding relationship shown in the following table can be used to determine a value of the information for indicating the first consistency information between the channel related information and the first information:

| the value of the information for indicating the first consistency information between the channel related information and the first information | the cosine similarity |
|---|---|
| 0 | 0.375 |
| 1 | 0.675 |
| 2 | 0.875 |
| 3 | 1 |

As shown in the table above, when a value of the cosine similarity is within the range of [0, 0.375], the information for indicating the first consistency information between the channel related information and the first information has a value of 0. When a value of the cosine similarity is within the range of [0.375, 0.675], the information for indicating the first consistency information between the channel related information and the first information has a value of 1. When a value of the cosine similarity is within the range of [0.675, 0.875], the information for indicating the first consistency information between the channel related information and the first information has a value of 2. When a value of the cosine similarity is within the range of [0.875, 1], the information for indicating the first consistency information between the channel related information and the first information has a value of 3.

It should be noted that the data in the above table are exemplary and do not serve as specific limitations of the present disclosure.

In an optional implementation, the first feedback information can also be determined directly based on the first consistency information. Specifically, the following steps are included.

(1) In a case where a first condition is met, determining that the first feedback information includes information for indicating that the CSI feedback information is obtained based on the first manner, where the first condition includes at least that: a value of the first consistency information belongs to a first range.

(2) In a case where a second condition is met, determining that the first feedback information includes information for indicating that the CSI feedback information is obtained based on the third manner, where the second condition includes at least that: a value of the first consistency information belongs to a second range.

(3) In a case where a third condition is met, determining that the first feedback information includes information for indicating that the CSI feedback information is obtained based on the first manner and the third manner, where the third condition includes at least that: a value of the first consistency information belongs to a second range.

In some optional implementations, if the third manner is a codebook technology (i.e. the first CSI is obtained by processing the channel related information based on the codebook technology), the first CSI may include any one or more types of information such as a precoding matrix indicator (Precoding Matrix Indicator, PMI) and a rank indicator (Rank Indicator, RI), etc.

In some optional implementations, when sending the second CSI to the network device, the first feedback information may also include information for indicating the accuracy of the CSI feedback information, the accuracy is used to indicate accuracy of the second CSI. As for the acquisition manner of the accuracy, the embodiment of the present disclosure is not specifically limited. As an example, it includes but is not limited to the following manners:

in a case where the first condition is met, determining that the first feedback information includes information for indicating that the CSI feedback information is the first accuracy; or
in a case where the second condition is met, determining that the first feedback information includes information for indicating that the CSI feedback information is the second accuracy; or
in a case where the third condition is met, determining that the first feedback information includes information for indicating that the CSI feedback information is the third accuracy;
where the first accuracy is higher than the second accuracy, and the second accuracy is higher than the third accuracy.

In some optional implementations, when sending the second CSI to the network device, the first feedback information may also include information for indicating whether the CSI feedback information is accurate.

Specifically, still taking the above as an example, in a case where the first and second conditions are met, the CSI feedback information is relatively accurate. At this time, it can be determined that the first feedback information includes information for indicating that the CSI feedback information is accurate. Correspondingly, in the case where the third condition is met, the CSI feedback information is inaccurate, at this time, it can be determined that the first feedback information includes information for indicating the inaccuracy of the CSI feedback information.

Optionally, in the case where the second condition is met, it can also be considered that the CSI feedback information is inaccurate, and it can be determined that the first feedback information includes information for indicating that the CSI feedback information is inaccurate.

In other optional implementations, when sending the second CSI to the network device, the first feedback information may also include information for indicating whether the CSI feedback information is valid.

Specifically, still taking the above as an example, in the case where the first and second conditions are met, the CSI feedback information is relatively accurate. At this time, it can be determined that the first feedback information includes information for indicating validity of the CSI feedback information. Correspondingly, in the case where the third condition is met, the CSI feedback information is inaccurate, at this time, it can be determined that the first feedback information includes information for indicating that the CSI feedback information is invalid.

Optionally, in the case where the second condition is met, it can also be considered that the CSI feedback information is inaccurate, and it can be determined that the first feedback information includes the information for indicating that the CSI feedback information is invalid.

In other optional implementations, when sending the second CSI to the network device, the first feedback information may also include information for indicating a quality level of the CSI feedback information.

Specifically, still taking the above as an example, in the case where the first condition is met, the CSI feedback information is accurate, at this time, it can be determined that the first feedback information includes the information for indicating that the quality level of the CSI feedback information is a first quality level.

Alternatively, in the case where the second condition is met, the CSI feedback information is relatively accurate, at this time, it can be determined that the first feedback information includes the information for indicating that the quality level of the CSI feedback information is a second quality level.

Alternatively, in the case where the third condition is met, the CSI feedback information is inaccurate, at this time, it can be determined that the first feedback information includes the information for indicating that the quality level of the CSI feedback information is a third quality level.

It should be noted that the first condition, second condition, and third condition corresponding to determination of the first feedback information are the same as those in the above embodiments for determining CSI feedback information. Please refer to the above embodiments for details, which will not be repeated here.

In a second optional evaluation method, FIG. 7 is a second schematic flowchart of a CSI evaluation method provided in an embodiment of the present disclosure. It should be noted that the execution body of the present embodiment can be the terminal in the above scenario. As shown in FIG. 7, the CSI evaluation process can include the following steps.

S701, processing the channel related information using a third manner to obtain the first CSI.

It should be noted that the third manner is any one CSI processing manner different from the first manner. As an example, taking the first manner as an encoding technology as an example, the third manner can be a codebook technology or a data-driven technology, etc.

Taking the third manner as an example of codebook technology, when processing the channel related information based on the codebook technology to obtain the first CSI, it can include but is not limited to the following manners:

the channel related information and each pre-coding matrix in the codebook are separately computed, and the pre-coding matrix and/or layer with the largest (or the smallest) computation result can be used as the first CSI; or

a first index can be determined based on the channel related information and each pre-coding matrix in the codebook, and the pre-coding matrix and/or layer corresponding to the largest first index or the smallest first index can be used as the first CSI.

Optionally, the first indicator is, for example, signal to interference and noise ratio (SINR, signal to interference-noise Ratio), capacity, etc.

S702, determining the first consistency information based on the channel related information and the first information.

S703, determining the second consistency information based on the channel related information and the first CSI.

As shown in FIG. 6 (b), the first CSI is obtained by the processing channel related information using the third manner. In the embodiment of the present disclosure, the channel related information can be used to evaluate the first CSI, thereby obtaining the second consistency information between the channel related information and the first CSI.

It should be understood that the second consistency information may include second similarity information and/or second error information between the channel related information and the first CSI.

As an example, the second similarity can be the cosine similarity between the channel related information and the first CSI. The second error information can be the normalized mean square error or mean square error between the channel related information and the first CSI.

It should be understood that, a method of determining the first consistency information in the present embodiment is similar to the method of determining the first consistency information in FIG. 5. Please refer to the above embodiments for details, which will not be repeated here.

Taking the second consistency information as the second similarity and the second similarity as the cosine similarity as an example, the value $\rho2$ of the second similarity information can be obtained based on the following formula (5):

$$\rho2 = \frac{|V''^H V|}{\|V''\|_2 \|V\|_2} \qquad (5)$$

where, V" is the first CSI, and V is the channel related information.

S705, determining the CSI feedback information and/or the first feedback information based on the first consistency information and the second consistency information.

Specifically, depending on the different conditions met by the first consistency information and the second consistency information, their corresponding CSI feedback information and/or first feedback information may also be different.

In a first aspect, for the CSI feedback information, it can include but is not limited to any one or more of the following situations.

I. In a case where a fourth condition is met, determining that the CSI feedback information includes the second CSI, where the fourth condition includes at least that: the first consistency information and the second consistency information meet a first relative relationship.

II. In a case where a fifth condition is met, determining that the CSI feedback information includes the first CSI, where the fifth condition includes at least that: the first consistency information and the second consistency information meet a second relative relationship.

III. In a case where a sixth condition is met, determining that the CSI feedback information includes the first CSI and the second CSI, where the sixth condition includes at least that: the first consistency information and the second consistency information meet a third relative relationship.

The relative relationship is used to indicate the magnitude of the values of the first consistency information and the second consistency information. As an example, if the first consistency information and the second consistency information are similarity information, the larger the value of the similarity information is, the better the consistency corresponding to the similarity information is. If the first consistency information and the second consistency information are error information, the smaller the value of the error information is, the better the consistency information corresponding to the error information is.

As an example, taking both the first consistency information and the second consistency information as consistency information as an example, in a first aspect, if the value $\rho1$ of the first similarity information is greater than the value $\rho2$ of the second similarity information (i.e., the first consistency information and the second consistency information meet the first relative relationship, and the fourth condition is met currently), it indicates that the performance of using the first manner to perform the CSI feedback is better. At this time, it is determined that the CSI feedback information includes the second CSI.

In a second aspect, if $\rho1$ is less than p2 (i.e., the first consistency information and the second consistency information meet the second relative relationship and the fifth condition is met currently), it indicates that the performance of using the third manner to perform CSI feedback is better. At this time, it is determined that the CSI feedback information includes the first CSI.

In a third aspect, if $\rho1$ is equal to p2 (i.e., the first consistency information and the second consistency information meet the third relative relationship, and the sixth condition is met currently), it indicates that the performance of using the third manner to perform the CSI feedback is basically the same as that of using the first manner to perform the CSI feedback. At this time, it is determined that the CSI feedback information includes the first CSI and the second CSI.

In some optional implementations, the current satisfied condition can also be determined based on a difference between the first similarity $\rho1$ and the second similarity p2, including but not limited to at least one of the following:

in a case where $\rho1$ is greater than p2, or the difference between $\rho1$ and p2 is within a fourth range, it is determined that the fourth condition is met currently, that is, it is determined that the CSI feedback information includes the second CSI; or
in a case where $\rho1$ is less than p2 and the difference between $\rho1$ and p2 is not within the fourth range but within a fifth range, it is determined that the fifth condition is met currently, that is, it is determined that the CSI feedback information includes the first CSI, where the fifth range is outside the fourth range; or
when $\rho1$ is less than p2 and the difference between $\rho1$ and p2 is within a sixth range, it is determined that the sixth condition is met currently, that is, it is determined that the CSI feedback information includes the second CSI and the first CSI, where the sixth range is a subset or full set of the fourth range.

In some optional implementations, the following solutions can also be included:

when $\rho1$ is less than p2 and the difference between $\rho1$ and p2 is within a seventh range, it is determined that the sixth condition is met currently, that is, it is determined that the CSI feedback information includes the second CSI and the first CSI, where the seventh range is a subset or full set of the fourth range; or
when $\rho1$ is less than p2 and the difference between p 1 and p 2 is within an eighth range, the CSI feedback information does not include the second CSI, where the eighth range is a subset or full set of the fourth range.

As an optional implementation, in one implementation, the first feedback information can be determined based on whether the CSI feedback information includes the first CSI and/or the second CSI.

As an example, if the CSI feedback information includes the first CSI, the first feedback information may indicate that the acquisition manner of the CSI feedback information is the third manner.

For another example, if the CSI feedback information includes the second CSI, the first feedback information may indicate that the acquisition manner of the CSI feedback information is the first manner.

For another example, if the CSI feedback information includes the first CSI and the second CSI, the first feedback information can indicate that the acquisition manners of the CSI feedback information are the first manner and the third manner.

In another optional implementation, the first feedback information can also be determined directly based on the relative relationship between the first consistency information and the second consistency information. Specifically, this includes but is not limited to the following situations:

I. in a case where a fourth condition is met, determining that the first feedback information includes the information for indicating that the CSI feedback information is obtained based on the first manner, where the fourth condition includes at least that: the first consistency information and the second consistency information meet the first relative relationship;
II. in a case where a fifth condition is met, determining that the first feedback information includes the information for indicating that the CSI feedback information is obtained based on the third manner, where the fifth condition includes at least that: the first consistency information and the second consistency information meet the second relative relationship;
III. in a case where a sixth condition is met, determining that the first feedback information includes the information for indicating that the CSI feedback information is obtained based on the first manner and the third manner, where the sixth condition includes at least that: the first consistency information and the second consistency information meet the third relative relationship.

In some optional embodiments, the second consistency information may also be a quantified value of the second similarity information and/or a quantified value of the second error information. Correspondingly, the first feedback information can also be the quantized value of the second consistency. As for the acquisition manner of quantified values, embodiments of the present disclosure is not specifically limited.

It should be noted that the fourth condition, fifth condition, and sixth condition corresponding to determination of the first feedback information are the same as those in the above embodiments for determining the CSI feedback information. Please refer to the above embodiments for details, which will not be repeated here.

Optionally, it is also possible to determine whether to send the CSI feedback information based on the first consistency information and/or the second consistency information. Specifically, it can include but is not limited to any of the following situations:

in a case where a seventh condition is met and/or an eighth condition is met, the CSI feedback information is not sent; where the seventh condition includes at least that: the value of the first consistency information belongs to a fourth range, and the eighth condition includes at least that: the first consistency information and the second consistency information meet the fourth relative relationship.

It should be noted that the seventh condition is similar to the second condition in the above embodiment, and the eighth condition is similar to the fifth condition mentioned above; correspondingly, the fourth range is similar to the second range in the above embodiment, and the fourth relative relationship is similar to the second relative relationship in the above embodiment.

That is to say, in the case where the value $\rho 1$ of the first consistency information is less than R2 (i.e. the second condition is met), it is determined that the similarity between the channel related information and the first information is low. At this time, the CSI feedback information may not be sent; alternatively, if the value $\rho 1$ of the first error information is less than the value $\rho 2$ of the second error information (i.e., the first consistency information and the second consistency information meet the second relative relationship), it indicates that the performance of using the first manner to perform the CSI feedback is poor. In this case, the CSI feedback information may not also be sent.

In some embodiments, in some optional implementations, when sending the second CSI to the network device, the first feedback information may also include the information for indicating the accuracy of the CSI feedback information, the accuracy is used to indicate accuracy of the second CSI. As for the acquisition manner of the accuracy, the embodiment of the present disclosure is not specifically limited. As an example, it includes but is not limited to the following manners:

in the case where the fourth condition is met, determining that the first feedback information includes the information for indicating that the CSI feedback information is the first accuracy; or
in the case where the fifth condition is met, determining that the first feedback information includes the information for indicating that the CSI feedback information is the second accuracy; or
in the case where the sixth condition is met, determining that the first feedback information includes the information for indicating that the CSI feedback information is the third accuracy;
where the first accuracy is higher than the second accuracy, and the second accuracy is higher than the third accuracy.

It should be noted that the fourth condition, fifth condition, and sixth condition corresponding to determination of the accuracy are the same as those in the above embodiments for determining the CSI feedback information. Please refer to the above embodiments for details, which will not be repeated here.

In some embodiments, the terminal sends the CSI feedback information and/or the first feedback information to the network device, the embodiment of the present disclosure is not specifically limited. For example, in the first implementation, the first feedback information can be sent to the network device first, and accordingly, the network device determines, based on the first feedback information, whether to receive the CSI feedback information. At this time, the first feedback information includes at least one of the following:

information for indicating an acquisition manner of the CSI feedback information; or
information for indicating accuracy of the CSI feedback information; or
information for indicating first consistency information between the channel related information and the first information; or
information for indicating the second consistency information between the channel related information and the first CSI; or
information for indicating whether the CSI feedback information is transmitted.

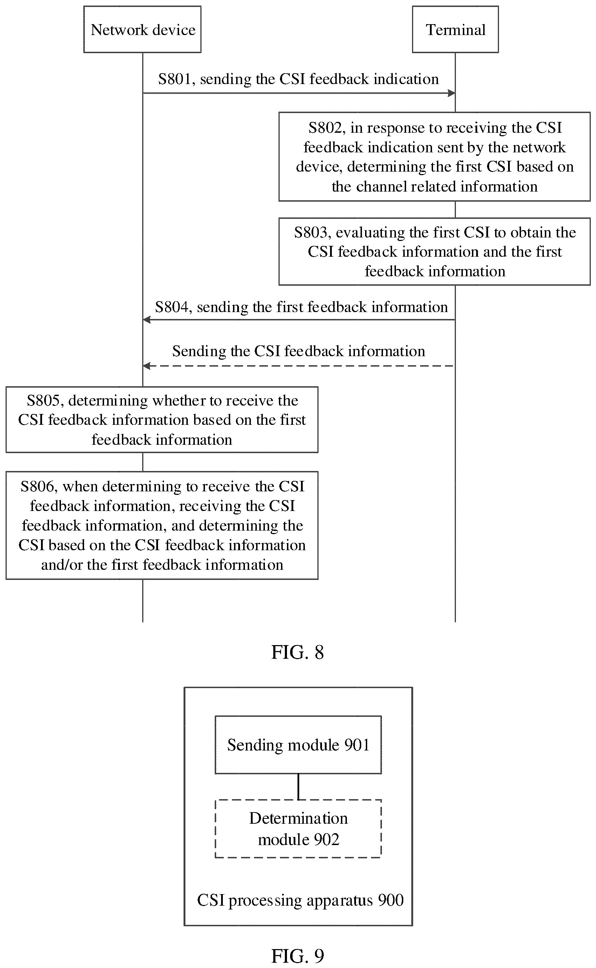

Next, an exemplary explanation of the first implementation will be firstly provided with reference to FIG. 8.

FIG. 8 is a third schematic diagram of a signaling interaction of a CSI processing method provided in an embodiment of the present disclosure. As shown in FIG. 8, the CSI processing method includes the following steps.

S801, the network device sends the CSI feedback indication to the terminal.

S802, in response to receiving the CSI feedback indication, the terminal determines the first CSI based on channel related information.

S803, the terminal evaluates the first CSI to obtain the CSI feedback information and the first feedback information.

It should be noted that steps S801-S803 can refer to instructions in the above embodiments, and will not be repeated here.

S804, sending first feedback information to the network device.

S805, the network device determines, based on the first feedback information, whether to receive the CSI feedback information.

Specifically, the determining, based on the first feedback information, whether to receive the CSI feedback information includes at least one of the following:

(1) in a case where the first feedback information indicates that the CSI feedback information is transmitted, and/or accuracy of the CSI feedback information indicated by the first feedback information meets a ninth condition, determining to receive the CSI feedback information, where the ninth condition includes at least that: the accuracy is first accuracy and/or second accuracy;

(2) in a case where the first feedback information indicates that the CSI feedback information is not transmitted, and/or accuracy of the CSI feedback information indicated by the first feedback information meets a tenth condition, determining not to receive the CSI feedback information, where the tenth condition includes at least that: the accuracy is third accuracy;

where the first accuracy is higher than the second accuracy, and the second accuracy is higher than the third accuracy.

S806, when determining to receive the CSI feedback information, the network device receives the CSI feedback information, and determining the CSI based on the CSI feedback information and/or the first feedback information.

It should be noted that the first feedback information and the CSI feedback information can be transmitted independently or simultaneously.

In a case where the first feedback information and the CSI feedback information are transmitted independently, for example, the first feedback information can be set to a longer period, and the CSI feedback information can be set to a shorter period. During the longer period, the feedback behavior uses the feedback manner corresponding to the first feedback information.

Specifically, the above step S806 includes at least one of the following.

(1) In the case where the first feedback information includes the information for indicating the acquisition manner of the CSI feedback information, the acquisition manner of the CSI feedback information can be determined based on the acquisition manner indicated by the first feedback information; and the CSI is obtained by using a manner corresponding to the acquisition manner.

For example, if the first feedback information includes the information for indicating that the acquisition manner of the CSI feedback information is the first manner, the CSI feedback information is analyzed to obtain the second CSI, and the second CSI is processed by using the second manner corresponding to the first manner to obtain the CSI.

Taking the first manner as an encoding technology as an example, after the CSI feedback information is analyzed to obtain the second CSI, the network device processes the second CSI based on the decoder module to obtain the CSI. The second CSI is obtained after the channel related information is processed by the terminal based on the encoder module, and the encoder module and the decoder module are obtained by through joint training.

In some optional embodiments, in addition to the decoder module, the network device can also use any one or more modules such as a de-quantizer module, a channel reconstruction module, etc. when obtaining the CSI. The embodiment of the present disclosure is not specifically limited.

Similarly, if the first feedback information includes the information for indicating that the acquisition manner of the CSI feedback information is the third manner, then the CSI feedback information is analyzed to obtain the CSI.

Optionally, in the case where the third manner is the codebook technology, PMI, RI, and other information can be obtained through analyzing.

(2) In the case where the first feedback information includes the information for indicating the accuracy of the second CSI in the CSI feedback information, the accuracy of the CSI feedback information is obtained based on the first feedback information, and the CSI is determined based on the accuracy by using at least one of the following manners:

I. in the case where the accuracy is the first accuracy, the CSI feedback information is analyzed to obtain the CSI;
II. in the case where the accuracy is the second accuracy, the CSI feedback information is analyzed, and at least a portion of the information in the analysis result are calibrated, to obtain the CSI;
III. in the case where the accuracy is the third accuracy, the CSI feedback information is not analyzed.

(3) In the case where the first feedback information includes the information for indicating the first consistency information and/or the second consistency information, the above step S806 specifically includes the following steps:

I. the first consistency information and/or the second consistency information can be determined based on the first feedback information;
II. the acquisition manner of the CSI feedback information is determined based on the first consistency information and/or the second consistency information;
III. the CSI is obtained by using a manner corresponding to the acquisition manner.

As an example, if the first feedback information includes the first consistency information and the value of the first consistency information meets the first condition, it indicates that the performance of using the first manner to perform the CSI feedback is good. At this time, it is determined that the acquisition manner of the CSI feedback information is the first manner. As for the situation where other conditions are met, please refer to the embodiment shown in the above FIG. 5, which will not be shown one by one here.

Correspondingly, if the first feedback information includes both the first consistency information and the second consistency information, and the values of the first consistency information and the second consistency information meet the fourth condition, it indicates that the performance of using the first manner to perform the CSI feedback is good. At this time, it is determined that the acquisition manner of the CSI feedback information is the first manner. As for the situation where other conditions are met, please refer to the embodiment shown in above FIG. 7, which will not be shown one by one here.

In some optional implementations, in the case where the CSI feedback information is received and the first feedback information includes the value of the first consistency information and/or the value of the second consistency information, the CSI can be determined directly based on the value of the first consistency information and/or the value of the second consistency information through the CSI feedback information.

As an example, if the first feedback information includes the first consistency information and the value of the first consistency information meets the first condition, it indicates that the performance of using the first manner to perform the CSI feedback is good. At this time, the CSI is obtained by directly analyzing the CSI feedback information. As for the situation where other conditions are met, please refer to the embodiment shown in the above FIG. 5, which will not be shown one by one here

In some optional implementations, in the case where the first feedback information includes the quantized value of the first consistency information and/or the quantized value of the second consistency information, the CSI feedback information can be determined based on the quantized value.

As an example, taking the first consistency information as the cosine similarity as an example, if the quantized value of the first consistency information is 0, it indicates that the similarity between the channel related information and the first information is low, which means that the accuracy of the CSI obtained through the first manner is low. At this time, it can be determined that the acquisition manner of the CSI feedback information is the third manner. As for the situation where the quantization value of the first consistency information is other values, please refer to the embodiment shown in the above FIG. 5, which will not be shown one by one here.

(5) In the case where the first feedback information includes the information for indicating whether the CSI feedback information is accurate, the above step S806 specifically includes but is not limited to at least one of the following situations:

in the case where the first feedback information includes the information for indicating that the CSI feedback information is accurate, it is determined that the second CSI included in the CSI feedback information is the CSI; or
in the case where the first feedback information includes the information for indicating that the CSI feedback information is inaccurate, the CSI feedback information is not analyzed.

(6) In the case where the first feedback information includes the information for indicating whether the CSI feedback information is valid, the above step S806 specifically includes but is not limited to at least one of the following situations:

in the case where the first feedback information includes the information for indicating that the CSI feedback information is valid, it is determined that the second CSI included in the CSI feedback information is the CSI; or

in the case where the first feedback information includes the information for indicating that the CSI feedback information is invalid, the CSI feedback information is not analyzed.

(7) In the case where the first feedback information includes the information for indicating the quality level of the CSI feedback information, the above step S806 specifically includes but is not limited to at least one of the following situations:

in the case where the quality level of the CSI feedback information is determined to be the first quality level, the CSI feedback information is analyzed to obtain the CSI; or

in the case where the quality level of the CSI feedback information is determined to be the second quality level, the CSI feedback information is analyzed and at least a portion of the information in the analysis result are calibrated, to obtain the CSI; or

in the case where the quality level of the CSI feedback information is determined to be the third quality level, the CSI feedback information is not analyzed.

In an optional implementation, in the case where the first feedback information includes information for indicating the accuracy or the quality level of the second CSI in the CSI feedback information, the acquisition manner of the CSI feedback information fed back currently can also be determined based on the accuracy or the quality level, and the CSI can be obtained according to the manner corresponding to the acquisition manner.

Specifically, in the case where the accuracy of the CSI feedback information is the first accuracy or the quality is the first quality level, it is determined that the current acquisition manner of the CSI feedback information is the first manner, and the CSI is obtained by using the second manner corresponding to the first manner.

Alternatively, in the case where the accuracy of the CSI feedback information is the second accuracy or the quality is the second quality level, it is determined that the current acquisition manner of the CSI feedback information is the first manner and the third manner, and the CSI is obtained by using the second manner corresponding to the first manner, or by using the third manner.

Alternatively, in the case where the accuracy of the CSI feedback information is the third accuracy or the quality is the third quality level, it is determined that the current acquisition manner of the CSI feedback information is the third manner, and the CSI is obtained by using the third manner.

In the embodiments of the present disclosure, the network device can first determine, based on the first feedback information, whether to receive the CSI feedback information, so that when the accuracy of the CSI feedback information is low, there is no need to receive and process the CSI feedback information, reducing the power consumption of the network device.

In the second implementation, the first feedback information can be carried in the CSI feedback information when it is determined that the CSI feedback information needs to be sent to the network device, so as to send both the CSI feedback information and the first feedback information to the network device, that is, the CSI feedback information and the first feedback information can be sent simultaneously. At this time, the first feedback information includes at least one of the following:

the information for indicating the acquisition manner of the CSI feedback information; or

the information for indicating the accuracy of the CSI feedback information; or

the information for indicating the first consistency information between the channel related information and the first information; or

the information for indicating the second consistency information between the channel related information and the first CSI.

It should be understood that although various steps in the flowchart in the above embodiment are displayed in the order indicated by the arrows, these steps are not necessarily executed in the order indicated by the arrows. Unless otherwise specified in this article, there is no strict order limit for the execution of these steps, and they can be executed in other orders. Moreover, at least a portion of the steps in the figure may include multiple sub steps or multiple stages, which are not necessarily completed at the same time, but can be executed at different times, and their execution order is not necessarily sequential, but can be executed in turn or alternately with at least a portion of other steps or sub steps or stages of other steps.

An embodiment of the present disclosure provides a CSI processing apparatus, which applied to a terminal. FIG. 9 is a first schematic structural diagram of a CSI processing apparatus provided in an embodiment of the present disclosure. As shown in FIG. 9, the CSI processing apparatus 900 includes:

a sending module 901, configured to send first feedback information to a network device in response to receiving the CSI feedback indication sent by the network device. The first feedback information includes at least one of the following:

information for indicating an acquisition manner of CSI feedback information; or

information for indicating accuracy of CSI feedback information; or

information for indicating first consistency information between channel related information and first information; or

information for indicating second consistency information between the channel related information and first CSI; or

information for indicating whether CSI feedback information is transmitted.

In some implementations, the CSI processing apparatus further includes: a determination module 902, configured to determine the first feedback information based on at least one of the CSI feedback information, the acquisition manner of the CSI feedback information, the accuracy of the CSI feedback information, the first consistency information, the second consistency information, and whether the CSI feedback information is transmitted.

In some implementations, the sending module 901 is further configured to send the CSI feedback information to the network device.

In some implementations, the CSI processing apparatus further includes: a determination module 902, configured to determine the second CSI based on the channel related information; and an acquisition module, configured to evaluate the second CSI to obtain the CSI feedback information and/or the first feedback information.

In some implementations, the determination module 902 is specifically configured to: process the channel related information using a first manner to obtain the second CSI; and the acquisition module is specifically configured to: process the second CSI using the second manner corresponding to the first manner to obtain the first information; and determine the CSI feedback information and/or the first feedback information based on the channel related information and/or the first information.

In some implementations, the determination module 902 is specifically configured to: determine the first consistency information based on the channel related information and the first information; the CSI feedback information and/or the first feedback information can be determined based on the first consistency information.

In some implementations, the determination module 902 is specifically configured to: determine whether the CSI feedback information includes the first CSI and/or the second CSI based on the first consistency information, where the first CSI is obtained by processing the channel related information using a third manner.

In some implementations, the determination module 902 is specifically configured to: determine that the CSI feedback information includes the second CSI in the case where the first condition is met, where the first condition includes at least that: a value of the first consistency information belongs to a first range; or

determine that the CSI feedback information includes the first CSI in the case where the second condition is met, where the second condition includes at least that: a value of the first consistency information belongs to a second range; or

determine that the CSI feedback information includes the first CSI and the second CSI in the case where the third condition is met, where the third condition includes at least that: a value of the first consistency information belongs to a third range.

In some implementations, the determination module 902 is specifically configured to: process the channel related information using a third manner to obtain the first CSI; determine the first consistency information based on the channel related information and the first information; determine the second consistency information based on the channel related information and the first CSI; and determine the CSI feedback information and/or the first feedback information based on the first consistency information and the second consistency information.

In some implementations, the determination module 902 is specifically configured to at least one of the following: in the case where the fourth condition is met, determine that the CSI feedback information includes the second CSI, where the fourth condition includes at least that: the first consistency information and the second consistency information meet a first relative relationship; or

in the case where the fifth condition is met, determine that the CSI feedback information includes the first CSI, where the fifth condition includes at least that: the first consistency information and the second consistency information meet a second relative relationship; or

in the case where the sixth condition is met, determine that the CSI feedback information includes the first CSI and the second CSI, where the sixth condition includes at least that: the first consistency information and the second consistency information meet a third relative relationship.

In some implementations, the determination module 902 is specifically configured to: determine that the first feedback information includes information for indicating that the CSI feedback information is obtained based on the first manner in the case where the first condition is met, where the first condition includes at least that: a value of the first consistency information belongs to a first range; or

determine that the first feedback information includes information for indicating that the CSI feedback information is obtained based on the third manner in the case where the second condition is met, where the second condition includes at least that: a value of the first consistency information belongs to a second range; or

determine that the first feedback information includes information for indicating that the CSI feedback information is obtained based on the first manner and the third manner in the case where the third condition is met, where the third condition includes at least that: a value of the first consistency information belongs to a second range;

determine that the first feedback information includes information for indicating that the CSI feedback information is obtained based on the first manner in the case where the fourth condition is met, where the fourth condition includes at least that: the first consistency information and the second consistency information meet the first relative relationship; or

determine that the first feedback information includes information for indicating that the CSI feedback information is obtained based on the third manner in the case where the fifth condition is met, where the fifth condition includes at least that: the first consistency information and the second consistency information meet the second relative relationship; or

determine that the first feedback information includes information for indicating that the CSI feedback information is obtained based on the first manner and the third manner in the case where the sixth condition is met, where the sixth condition includes at least that: the first consistency information and the second consistency information meet the third relative relationship.

In some implementations, the determination module 902 is further configured to: determine whether to send the CSI feedback information based on the first consistency information and/or the second consistency information.

In some implementations, the determination module 902 is further configured to: not send the CSI feedback information in the case where a seventh condition is met and/or an eighth condition is met, where the seventh condition includes at least that: the value of the first consistency information belongs to a fourth range, and the eighth condition includes at least that: the first consistency information and the second consistency information meet a fourth relative relationship.

In some implementations, the first consistency information includes: the first similarity information and/or the first error information; and the second consistency information includes: the second similarity information and/or the second error information.

It should be noted that the CSI processing apparatus 900 provided in the present disclosure can implement the steps of the CSI processing method corresponding to the terminal in the above method embodiments, and can achieve the same technical effects. Therefore, the same parts and beneficial effects in the method embodiments and in this embodiment will not be specifically described here.

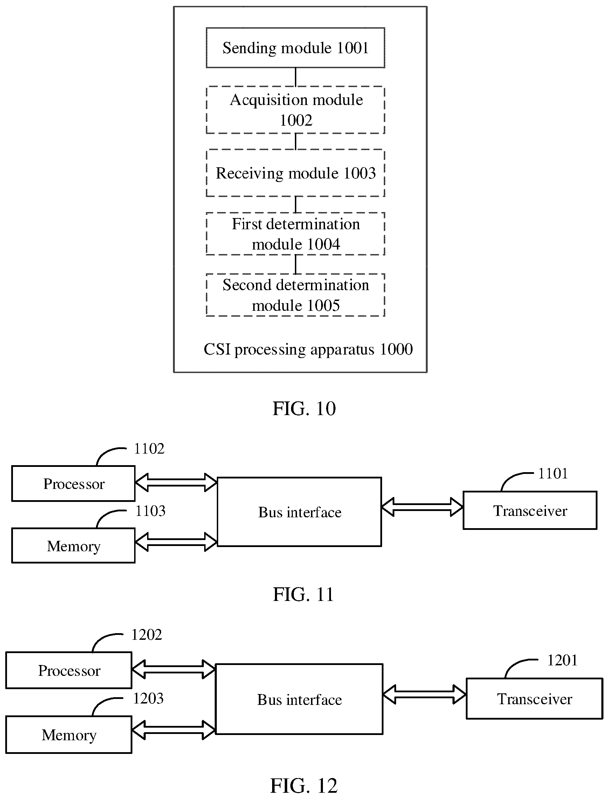

An embodiment of the present disclosure provides a CSI processing apparatus, which applied to a network device. FIG. 10 is a second schematic structural diagram of a CSI processing apparatus provided in an embodiment of the present disclosure. As shown in FIG. 10, the CSI processing apparatus 1000 includes:

a sending module 1001, configured to send a CSI feedback indication to a terminal;
an acquisition module 1002, configured to obtain first feedback information corresponding to the CSI feedback indication, where the first feedback information includes at least one of the following:

information for indicating an acquisition manner of CSI feedback information; or
information for indicating accuracy of CSI feedback information; or
information for indicating first consistency information between the channel related information and first information; or
information for indicating second consistency information between the channel related information and first CSI; or
information for indicating whether CSI feedback information is transmitted.

In some implementations, the CSI processing apparatus 1000 further includes: a receiving module 1003 or a first determination module 1004, the receiving module 1003 is configured to receive the CSI feedback information, where the acquisition manner of the CSI feedback information corresponds to an acquisition manner of CSI feedback information indicated by the first feedback information; the first determination module is configured to determine, based on the first feedback information, whether to receive the CSI feedback information.

In some implementations, the CSI processing apparatus 1000 further includes a second determination module 1005, configured to determine CSI based on the CSI feedback information and/or the first feedback information.

In some implementations, the CSI feedback information is determined based on the channel related information and/or the first information, where the first information is obtained by processing the second CSI using a second manner corresponding to a first manner, and the second CSI is obtained by processing the channel related information using the first manner.

In some implementations, the first determination module 1004 is specifically configured to: determine to receive the CSI feedback information in a case where the first feedback information indicates that the CSI feedback information is transmitted, and/or the accuracy of the CSI feedback information indicated by the first feedback information meets the ninth condition, where the ninth condition includes at least that: the accuracy is the first accuracy and/or the second accuracy; or determine not to receive the CSI feedback information in the case where the first feedback information indicates that the CSI feedback information is not transmitted, and/or the accuracy of the CSI feedback information indicated by the first feedback information meets the tenth condition, where the tenth condition includes at least that: the accuracy is the third accuracy.

In some implementations, the second determination module 1005 is specifically configured to: determine the acquisition manner of the CSI feedback information based on the first feedback information; and obtain the CSI using a manner corresponding to the acquisition manner.

In some implementations, the second determination module 1005 is specifically configured to: obtain the accuracy of the CSI feedback information based on the first feedback information; and determine the CSI based on the accuracy using at least one of the following manners:

in the case where the accuracy is first accuracy, analyze the CSI feedback information to obtain the CSI; or
in the case where the accuracy is second accuracy, analyze the CSI feedback information and calibrate at least a portion of information in an analysis result to obtain the CSI; or
in the case where the accuracy is third accuracy, the CSI feedback information is not analyzed to obtain the CSI.

In some implementations, the second determination module 1005 is specifically configured to: determine the first consistency information and/or the second consistency information based on the first feedback information; determine the acquisition manner of the CSI feedback information based on the first consistency information and/or the second consistency information; and obtain the CSI using the manner corresponding to the acquisition manner.

It should be noted that the CSI processing apparatus 1000 provided in the present disclosure can implement the steps of the CSI processing method corresponding to the network device in the above method embodiments, and can achieve the same technical effects. Therefore, the same parts and beneficial effects in the method embodiments and in this embodiment will not be specifically described here.

The present disclosure provides a terminal. FIG. 11 is a schematic structural diagram of a terminal provided in an embodiment of the present disclosure. As shown in FIG. 11, the terminal includes a transceiver 1101, a processor 1102, and a memory 1103.

The transceiver 1101 is configured to transmit and receive data under the control of a processor 1102. In in FIG. 11, the bus architecture can include any number of interconnected buses and bridges, specifically link various circuits of one or more processors represented by processor 1102 and memories represented by memory 1103 together. The bus architecture can also link various other circuits such as peripheral devices, voltage regulators, and power management circuits together, which are well-known in this field. Therefore, this article will not further describe them. The bus interface provides interfaces. The transceiver 1101 can be multiple components, including a transmitter and a receiver, and provide a unit for communicating with various other apparatuses over transmission media, the transmission media includes wireless channels, wired channels, optical cables, and other transmission media. The processor 1102 is responsible for managing the bus architecture and usual processing, while the memory 1103 can store data used by the processor 1102 when performing operations.

The processor 1102 is responsible for managing the bus architecture and usual processing, while the memory 1103 can store data used by the processor 1102 when performing operations.

Optionally, the processor 1102 can be a central processing unit (Central Processing Unit, CPU), an application specific integrated circuit (Application Specific Integrated Circuit, ASIC), a field programmable gate array (Field Programmable Gate Array, FPGA), or a complex programmable logic device (Complex Programmable Logic Device, CPLD), and the processor can also use a multi-core architecture. The processor 1102 calls a computer program stored in the memory 1103 to execute any method related to the terminal device provided in an embodiment of the present disclosure according to obtained executable instructions. The processor and the memory can also be arranged in a physically separate manner.

Specifically, the processor 1102 is configured to read a computer program from the memory and perform the following operations: in response to receiving a CSI feedback indication sent by a network device, the first feedback information is sent to the network device; where the first feedback information includes at least one of the following:

information for indicating an acquisition manner of the CSI feedback information; or
information for indicating accuracy of CSI feedback information; or

information for indicating first consistency information between channel related information and first information; or information for indicating second consistency information between channel related information and first CSI; or information for indicating whether CSI feedback information is transmitted.

In some implementations, the processor is further configured to: determine the first feedback information based on at least one of the CSI feedback information, the acquisition manner of the CSI feedback information, the accuracy of the CSI feedback information, the first consistency information, the second consistency information, and whether the CSI feedback information is transmitted.

In some implementations, the processor is further configured to: send the CSI feedback information to the network device.

In some implementations, the processor is further configured to: determine second CSI based on the channel related information; and evaluate the second CSI to obtain the CSI feedback information and/or the first feedback information.

In some implementations, determining the second CSI based on the channel related information includes: processing the channel related information using a first manner to obtain the second CSI;

evaluating the second CSI to obtain the CSI feedback information and/or the first feedback information includes: processing the second CSI based on a second manner corresponding to the first manner to obtain the first information; and determining the CSI feedback information and/or the first feedback information based on the channel related information and/or the first information.

In some implementations, the determining the CSI feedback information and/or the first feedback information based on the channel related information and/or the first information includes: determining the first consistency information based on the channel related information and the first information; and determining the CSI feedback information and/or the first feedback information based on the first consistency information.

In some implementations, determining the CSI feedback information based on the first consistency information includes: determining whether the CSI feedback information includes the first CSI and/or the second CSI based on the first consistency information, where the first CSI is obtained by processing the channel related information using a third manner.

In some implementations, the determining whether the CSI feedback information includes the first CSI and/or the second CSI based on the first consistency information includes at least one of the following: in a case where a first condition is met, determining that the CSI feedback information includes the second CSI, where the first condition includes at least that: a value of the first consistency information belongs to a first range; or

in a case where a second condition is met, determining that the CSI feedback information includes the first CSI, where the second condition includes at least that: a value of the first consistency information belongs to a second range; or
in a case where a third condition is met, determining that the CSI feedback information includes the first CSI and the second CSI, where the third condition includes at least that: a value of the first consistency information belongs to a third range.

In some implementations, the determining the CSI feedback information and/or the first feedback information based on the channel related information and/or the first information includes: processing the channel related information using a third manner to obtain the first CSI; determining the first consistency information based on the channel related information and the first information; determining the second consistency information based on the channel related information and the first CSI; and determining the CSI feedback information and/or the first feedback information based on the first consistency information and the second consistency information.

In some implementations, determining the CSI feedback information based on the first consistency information and the second consistency information includes at least one of the followings: in a case where a fourth condition is met, determining that the CSI feedback information includes the second CSI, where the fourth condition includes at least that: the first consistency information and the second consistency information meet a first relative relationship; or

in a case where a fifth condition is met, determining that the CSI feedback information includes the first CSI, where the fifth condition includes at least that: the first consistency information and the second consistency information meet a second relative relationship; or

in a case where a sixth condition is met, determining that the CSI feedback information includes the first CSI and the second CSI, where the sixth condition includes at least that: the first consistency information and the second consistency information meet a third relative relationship.

In some implementations, the processor 1102 is further configured to: in a case where a first condition is met, determine that the first feedback information includes information for indicating that the CSI feedback information is obtained using the first manner, where the first condition includes at least that: a value of the first consistency information belongs to a first range; or

in a case where a second condition is met, determine that the first feedback information includes information for indicating that the CSI feedback information is obtained using the third manner, where the second condition includes at least that: a value of the first consistency information belongs to a second range; or

in a case where a third condition is met, determine that the first feedback information includes information for indicating that the CSI feedback information is obtained using the first manner and the third manner, where the third condition includes at least that: a value of the first consistency information belongs to a second range;

in a case where a fourth condition is met, determine that the first feedback information includes information for indicating that the CSI feedback information is obtained using the first manner, where the fourth condition includes at least that: the first consistency information and the second consistency information meet the first relative relationship; or

in a case where a fifth condition is met, determine that the first feedback information includes information for indicating that the CSI feedback information is obtained using the third manner, where the fifth condition includes at least that: the first consistency information and the second consistency information meet the second relative relationship; or

in a case where a sixth condition is met, determine that the first feedback information includes information for indicating that the CSI feedback information is obtained using the first manner and the third manner, where the sixth condition includes at least that: the first consistency information and the second consistency information meet the third relative relationship.

In some implementations, the processor is further configured to: determine whether to send the CSI feedback information based on the first consistency information and/or the second consistency information.

In some implementations, determining whether to send the CSI feedback information based on the first consistency information and/or the second consistency information includes: in a case where a seventh condition is met and/or an eighth condition is met, not sending the CSI feedback information, where seventh condition includes at least that: the value of the first consistency information belongs to a fourth range, and the eighth condition includes at least that: the first consistency information and the second consistency information meet a fourth relative relationship.

In some implementations, the first consistency information includes: first similarity information and/or first error information; and the second consistency information includes: second similarity information and/or second error information

It should be noted that the terminal provided in the present disclosure can implement all the method steps corresponding to the terminal implemented in the above method embodiments, and can achieve the same technical effects. Therefore, the same parts and beneficial effects in the method embodiments and in this embodiment will not be specifically described here.

An embodiment of the present disclosure provides a network device. FIG. 12 is a schematic structural diagram of a network device provided in an embodiment of the present disclosure. As shown in FIG. 12, the network device 1200 includes a transceiver 1201, a processor 1202, and a memory 1203.

The transceiver 1201 is configured to transmit and receive data under the control of a processor 1202. In FIG. 12, the bus architecture can include any number of interconnected buses and bridges, specifically link various circuits of one or more processors represented by processor 1202 and memories represented by memory 1203 together. The bus architecture can also link various other circuits such as peripheral devices, voltage regulators, and power management circuits together, which are well-known in this field. Therefore, this article will not further describe them. The bus interface provides interfaces. The transceiver 1201 can be multiple components, including a transmitter and a receiver, and provide a unit for communicating with various other apparatuses over transmission media, the transmission media includes wireless channels, wired channels, optical cables, and other transmission media. The processor 1202 is responsible for managing the bus architecture and usual processing, while the memory 1203 can store data used by the processor 1202 when performing operations.

The processor 1202 is responsible for managing the bus architecture and usual processing, while the memory 1203 can store data used by the processor 1202 when performing operations.

Optionally, the processor 1202 can be a central processing unit (Central Processing Unit, CPU), an application specific integrated circuit (Application Specific Integrated Circuit, ASIC), a field programmable gate array (Field Programmable Gate Array, FPGA), or a complex programmable logic device (Complex Programmable Logic Device, CPLD), and the processor can also use a multi-core architecture. The processor 1202 calls a computer program stored in the memory 1203 to execute any method related to the terminal device provided in an embodiment of the present disclosure according to the obtained executable instructions. The processor and the memory can also be arranged in a physically separate manner.

Specifically, the processor 1202 is configured to read the computer program from the memory and perform the following operations:

sending a CSI feedback indication to a terminal; obtaining first feedback information corresponding to the CSI feedback indication, where the first feedback information includes at least one of the following:

information for indicating an acquisition manner of CSI feedback information; or

information for indicating accuracy of CSI feedback information; or

information for indicating first consistency information between channel related information and first information; or

information for indicating second consistency information between channel related information and first CSI; or

information for indicating whether CSI feedback information is transmitted.

In some implementations, the processor 1202 is further configured to: receive the CSI feedback information, where the acquisition manner of the CSI feedback information corresponds to an acquisition manner of CSI feedback information indicated by the first feedback information; or determine, based on the first feedback information, whether to receive the CSI feedback information.

In some implementations, the processor 1202 is further configured to: determine CSI based on the CSI feedback information and/or the first feedback information.

In some implementations, the CSI feedback information is determined based on channel related information and/or first information, where the first information is obtained by processing the second CSI using a second manner corresponding to the first manner, and the second CSI is obtained by processing the channel related information using the first manner.

In some implementations, determining, based on the first feedback information, whether to receive the CSI feedback information includes at least one of the following: in a case where the first feedback information indicates that the CSI feedback information is transmitted, and/or accuracy of the CSI feedback information indicated by the first feedback information meets a ninth condition, determining to receive the CSI feedback information, where the ninth condition includes at least that: the accuracy is first accuracy and/or second accuracy; or

in a case where the first feedback information indicates that the CSI feedback information is not transmitted, and/or accuracy of the CSI feedback information indicated by the first feedback information meets a tenth condition, determining not to receive the CSI feedback information, where the tenth condition includes at least that: the accuracy is third accuracy.

In some implementations, determining the CSI based on the CSI feedback information and/or the first feedback information includes: determine the acquisition manner of the CSI feedback information based on the first feedback information; and obtaining the CSI using a manner corresponding to the acquisition manner.

In some implementations, determining CSI based on the CSI feedback information and/or the first feedback information includes: obtaining the accuracy of the CSI feedback information based on the first feedback information; determining the CSI based on the accuracy using at least one of the following manners: in a case where the accuracy is the accuracy, analyze the CSI feedback information to obtain the CSI; or

in a case where the accuracy is second accuracy, analyze the CSI feedback information and calibrate at least a portion of information in an analysis result to obtain the CSI; or

in a case where the accuracy is third accuracy, not analyze the CSI feedback information to obtain the CSI.

In some implementations, determining the CSI based on the CSI feedback information and/or the first feedback information includes: determining the first consistency information and/or the second consistency information based on the first feedback information; determining the acquisition manner of the CSI feedback information based on the first consistency information and/or the second consistency information; and obtaining the CSI using a manner corresponding to the acquisition manner.

It should be noted that the network device provided in the present disclosure can implement all the method steps corresponding to the network device implemented in the above method embodiments, and can achieve the same technical effects. Therefore, the same parts and beneficial effects in the method embodiments and in this embodiment will not be specifically described here.

It should be noted that division of units in an embodiment of the present disclosure is illustrative. And it is only logical functional division, in an actual implementation, there may be other division methods. In addition, the various functional units in an embodiment of the present disclosures can be integrated into one processing unit, or each unit exists physically separately, or two or more units can be integrated into one unit. The integrated units mentioned above can be implemented in the form of hardware or software functional units.

When the integrated units mentioned above are implemented in the form of software functional units and sold or used as independent products, they can be stored in a processor readable storage medium. Based on this understanding, the technical solution of the present disclosure essentially or part that contributes to existing technology, or all or part of the technical solution can be embodied in the form of a software product. The software product is stored in a storage medium and includes several instructions for a computer device (which can be a personal computer, server, or network device, etc.) or processor to execute all or part of steps of the various method embodiments of the present disclosure. The aforementioned storage media include various media that can store program code, such as a USB flash disk, a mobile hard disk, a read only memory (Read Only Memory, ROM), a random access memory (Random Access Memory, RAM), a magnetic disk, or an optical disk, etc.

An embodiment of the present disclosure provides a processor readable storage medium, which stores a computer program. The computer program is used to enable the processor to execute the network energy-saving method provided in an embodiment of the present disclosure, so that the processor can implement all steps of the network energy-saving method implemented by the network device in the above method embodiment, and achieve the same technical effect. Therefore, the same parts and beneficial effects in the method embodiments and in this embodiment will not be specifically described here. Where, the processor readable storage medium can be any available medium or data storage device that the processor can access, including but is not limited to a magnetic storage (such as a floppy disk, a hard disk, a magnetic tape, a magneto-optical disk (MO), etc.), an optical storage (such as a CD, a DVD, a BD, a HVD, etc.), and a semiconductor storage (such as a ROM, an EPROM, an EEPROM, a non-volatile memory (NAND FLASH), a solid state drive (SSD), etc.).

An embodiment of the present disclosure also provides a computer program product containing instructions. The computer program is stored in a storage medium. At least one processor can read the computer program from the storage medium, and at least one processor executing the computer program can implement all the steps of the network energy-saving method implemented by the network device in the above method embodiment, and achieve the same technical effect. Therefore, the same parts and beneficial effects in the method embodiments and in this embodiment will not be specifically described here.

An embodiment of the present disclosure also provides a communication system, which including a network device and a terminal. The network device can perform all the steps in the implementation of the CSI processing method corresponding to the network device mentioned above, and can achieve the same technical effect. Therefore, the same parts and beneficial effects in the method embodiments and in this embodiment will not be specifically described here.

Technicians in the present field should understand that embodiments of the present disclosure can be provided as methods, systems, or computer program products. Therefore, the embodiment of the present disclosures can take the form of fully hardware embodiments, fully software embodiments, or embodiments combining software and hardware aspects. Moreover, the present disclosure may take the form of a computer program product implemented on one or more computer usable storage media (including but is not limited to a disk storage and an optical storage) containing computer usable program code.

The present disclosure is described with reference to signaling interaction diagrams and/or block diagrams of methods, devices, and computer program products according to embodiments of the present disclosure. It should be understood that each process and/or block in the signaling interaction diagrams and/or block diagrams can be implemented by computer executable instructions, as well as the combination of processes and/or blocks in the signaling interaction diagrams and/or block diagrams. These computer executable instructions can be provided to the processors of general-purpose computers, specialized computers, embedded processors, or other programmable data processing devices to generate a machine that enables the instructions executed by the processors of the computer or other programmable data processing devices to produce a device for implementing the functions specified in a process or multiple processes of the signaling interaction diagrams, and/or a box or multiple boxes of the block diagrams. These processor executable instructions can also be stored in a processor readable memory that can guide a computer or other programmable data processing device to operate in a specific manner, such that the instructions stored in the processor readable memory generate a manufactured product including instruction devices that implement the functions specified in one or more processes of the signaling interaction diagrams, and/or one or more boxes of the block diagrams.

These processor executable instructions can also be loaded onto a computer or other programmable data processing device, enabling a series of operational steps to be performed on the computer or other programmable device to generate computer implemented processing. The instructions executed on the computer or other programmable device provide steps for implementing steps of functions specified in one or more processes of the signaling interaction diagrams, and/or one or more boxes of the block diagrams.

Obviously, technicians in the present field can make various modifications and variations to the present disclosure without departing from the spirit and scope of the present disclosure. In this way, if these modifications and variations disclosed herein fall within the scope of the claims and their equivalent technologies, then the present disclosure is also intended to include these modifications and variations.

## Claims

1. A channel state information CSI processing method, applied to a terminal, the CSI processing method comprises: in response to receiving a CSI feedback indication sent by a network device, sending first feedback information to the network device; wherein the first feedback information comprises at least one of the following:

    information for indicating an acquisition manner of CSI feedback information; or

information for indicating accuracy of CSI feedback information; or
information for indicating first consistency information between channel related information and first information; or
information for indicating second consistency information between channel related information and first CSI; or
information for indicating whether CSI feedback information is transmitted.

2. The CSI processing method according to claim 1, further comprising: determining the first feedback information based on at least one of the CSI feedback information, the acquisition manner of the CSI feedback information, the accuracy of the CSI feedback information, the first consistency information, the second consistency information, and whether the CSI feedback information is transmitted.

3. The CSI processing method according to claim 1, further comprising: sending the CSI feedback information to the network device.

4. The CSI processing method according to any one of claims 1 to 3, further comprising:

determining second CSI based on the channel related information; and
evaluating the second CSI to obtain the CSI feedback information and/or the first feedback information.

5. The CSI processing method according to claim 4, wherein the determining the second CSI based on the channel related information comprises:

processing the channel related information using a first manner to obtain the second CSI;
the evaluating the second CSI to obtain the CSI feedback information and/or the first feedback information comprises:

processing the second CSI based on a second manner corresponding to the first manner to obtain the first information; and
determining the CSI feedback information and/or the first feedback information based on the channel related information and/or the first information.

6. The CSI processing method according to claim 5, wherein the determining the CSI feedback information and/or the first feedback information based on the channel related information and/or the first information comprises:

determining the first consistency information based on the channel related information and the first information; and
determining the CSI feedback information and/or the first feedback information based on the first consistency information.

7. The CSI processing method according to claim 6, wherein determining the CSI feedback information based on the first consistency information comprises:
determining whether the CSI feedback information comprises the first CSI and/or the second CSI based on the first consistency information, wherein the first CSI is obtained by processing the channel related information using a third manner.

8. The CSI processing method according to claim 7, wherein the determining whether the CSI feedback information comprises the first CSI and/or the second CSI based on the first consistency information comprises at least one of the following:

in a case where a first condition is met, determining that the CSI feedback information comprises the second CSI, wherein the first condition comprises at least that: a value of the first consistency information belongs to a first range; or
in a case where a second condition is met, determining that the CSI feedback information comprises the first CSI, wherein the second condition comprises at least that: a value of the first consistency information belongs to a second range; or
in a case where a third condition is met, determining that the CSI feedback information comprises the first CSI and the second CSI, wherein the third condition comprises at least that: a value of the first consistency information belongs to a third range.

9. The CSI processing method according to any one of claims 5 to 8, wherein the determining the CSI feedback information and/or the first feedback information based on the channel related information and/or the first information comprises:

processing the channel related information using a third manner to obtain the first CSI;
determining the first consistency information based on the channel related information and the first information;
determining the second consistency information based on the channel related information and the first CSI; and
determining the CSI feedback information and/or the first feedback information based on the first consistency information and the second consistency information.

10. The CSI processing method according to claim 9, wherein determining the CSI feedback information based on the first consistency information and the second consistency information comprises at least one of the following:

in a case where a fourth condition is met, determining that the CSI feedback information comprises the second CSI, wherein the fourth condition comprises at least that: the first consistency information and the second consistency information meet a first relative relationship; or
in a case where a fifth condition is met, determining that the CSI feedback information comprises the first CSI, wherein the fifth condition comprises at least that: the first consistency information and the second consistency information meet a second relative relationship; or
in a case where a sixth condition is met, determining that the CSI feedback information comprises the first CSI and the second CSI, wherein the sixth condition comprises at least that: the first consistency information and the second consistency information meet a third relative relationship.

11. The CSI processing method according to claim 10, wherein the determining the first feedback information based on the first consistency information comprises at least one of the following:

in a case where a first condition is met, determining that the first feedback information comprises information for indicating that the CSI feedback information is obtained based on the first manner, wherein the first condition comprises at least that: a value of the first consistency information belongs to a first range; or
in a case where a second condition is met, determining that the first feedback information comprises information for indicating that the CSI feedback information is obtained based on the third manner, wherein the second condition comprises at least that: a value of the first consistency information belongs to a second range; or
in a case where a third condition is met, determining that the first feedback information comprises information for indicating that the CSI feedback information is obtained based on the first manner and the third manner, wherein the third condition comprises at least that: a value of the first consistency information belongs to a second range;
determining the first feedback information based on the first consistency information and the second consistency information comprises at least one of the following:

in a case where a fourth condition is met, determining that the first feedback information comprises information for indicating that the CSI feedback information is obtained based on the first manner, wherein the fourth condition comprises at least that: the first consistency information and the second consistency information meet the first relative relationship; or
in a case where a fifth condition is met, determining that the first feedback information comprises information for indicating that the CSI feedback information is obtained based on the third manner, wherein the fifth condition comprises at least that: the first consistency information and the second consistency information meet the second relative relationship; or
in a case where a sixth condition is met, determining that the first feedback information comprises information for indicating that the CSI feedback information is obtained based on the first manner and the third manner, wherein the sixth condition comprises at least that: the first consistency information and the second consistency information meet the third relative relationship.

12. The CSI processing method according to any one of claims 1 to 11, further comprising: determining whether to send the CSI feedback information based on the first consistency information and/or the second consistency information.

13. The CSI processing method according to claim 12, wherein the determining whether to send the CSI feedback information based on the first consistency information and/or the second consistency information comprises:
in a case where a seventh condition is met and/or an eighth condition is met, not sending the CSI feedback information, wherein the seventh condition comprises at least that: the value of the first consistency information belongs to a fourth range, and the eighth condition comprises at least that: the first consistency information and the second consistency information meet a fourth relative relationship.

14. The CSI processing method according to any one of claims 1 to 11, wherein the first consistency information comprises: first similarity information and/or first error information; and the second consistency information comprises: second similarity information and/or second error information.

15. A channel state information CSI processing method, applied to a network device, the CSI processing method comprises:

sending a CSI feedback indication to a terminal;
obtaining first feedback information corresponding to the CSI feedback indication, wherein the first feedback information comprises at least one of the following:

information for indicating an acquisition manner of CSI feedback information; or
information for indicating accuracy of CSI feedback information; or
information for indicating first consistency information between channel related information and first information; or
information for indicating second consistency information between channel related information and first CSI; or
information for indicating whether CSI feedback information is transmitted.

16. The CSI processing method according to claim 15, further comprising:
receiving the CSI feedback information, wherein the acquisition manner of the CSI feedback information corresponds to an acquisition manner of CSI feedback information indicated by the first feedback information; or determining, based on the first feedback information, whether to receive the CSI feedback information.

17. The CSI processing method according to claim 15 or 16, further comprising: determining CSI based on the CSI feedback information and/or the first feedback information.

18. The CSI processing method according to claim 17, wherein the CSI feedback information is determined based on channel related information and/or first information, wherein the first information is obtained by processing second CSI using a second manner corresponding to a first manner, and the second CSI is obtained by processing the channel related information using the first manner.

19. The CSI processing method according to claim 17, wherein the determining, based on the first feedback information, whether to receive the CSI feedback information comprises at least one of the following:

in a case where the first feedback information indicates that the CSI feedback information is transmitted, and/or accuracy of the CSI feedback information indicated by the first feedback information meets a ninth condition, determining to receive the CSI feedback information, wherein the ninth condition comprises at least that: the accuracy is first accuracy and/or second accuracy; or
in a case where the first feedback information indicates that the CSI feedback information is not transmitted, and/or accuracy of the CSI feedback information indicated by the first feedback information meets a tenth condition, determining not to receive the CSI feedback information, wherein the tenth condition comprises at least that: the accuracy is third accuracy.

20. The CSI processing method according to any one of claims 17-19, wherein the determining the CSI based on the CSI feedback information and/or the first feedback information comprises: determining the acquisition manner of the CSI feedback information based on the first feedback information; and obtaining the CSI using a manner corresponding to the acquisition manner.

21. The CSI processing method according to any one of claims 17-19, wherein the determining the CSI based on the CSI feedback information and/or the first feedback information comprises:

obtaining the accuracy of the CSI feedback information based on the first feedback information;
determining the CSI based on the accuracy using at least one of the following manners:

in a case where the accuracy is first accuracy, analyzing the CSI feedback information to obtain the CSI; or
in a case where the accuracy is second accuracy, analyzing the CSI feedback information and calibrating at least a portion of information in an analysis result to obtain the CSI; or
in a case where the accuracy is third accuracy, not analyzing the CSI feedback information to obtain the CSI.

22. The CSI processing method according to any one of claims 17-19, wherein the determining the CSI based on the CSI feedback information and/or the first feedback information comprises:

determining the first consistency information and/or the second consistency information based on the first feedback information;
determining the acquisition manner of the CSI feedback information based on the first consistency information and/or the second consistency information; and
obtaining the CSI using a manner corresponding to the acquisition manner.

23. A channel state information CSI processing apparatus, applied to a terminal, the CSI processing apparatus comprises:
a sending module, configured to send first feedback information to a network device in response to receiving a CSI feedback indication sent by the network device; wherein the first feedback information comprises at least one of the following:

information for indicating an acquisition manner of CSI feedback information; or
information for indicating accuracy of CSI feedback information; or
information for indicating first consistency information between channel related information and first information; or
information for indicating second consistency information between channel related information and first CSI; or
information for indicating whether CSI feedback information is transmitted.

24. The CSI processing apparatus according to claim 23, wherein the CSI processing apparatus further comprises:
a determination module, configured to determine the first feedback information based on at least one of CSI feedback information, the accuracy of CSI feedback information, first consistency information, second consistency information, and whether CSI feedback information is transmitted.

25. The CSI processing apparatus according to claim 23, wherein the sending module is further configured to send the CSI feedback information to the network device.

26. The CSI processing apparatus according to any one of claims 23-25, wherein, the CSI processing apparatus further comprises: a determination module, configured to determine second CSI based on the channel related information; and an acquisition module, configured to evaluate the second CSI to obtain the CSI feedback information and/or the first feedback information

27. The CSI processing apparatus according to claim 26, wherein the determination module is specifically configured to at least one of the following: process channel related information using a first manner to obtain a second CSI; and the acquisition module is specifically configured to: process the second CSI using a second manner corresponding to the first manner to obtain the first information; and determine the CSI feedback information and/or the first feedback information based on the channel related information and/or the first information.

28. The CSI processing apparatus according to claim 27, wherein the determination module is specifically configured to: determine the first consistency information based on the channel related information and the first information; and determine the CSI feedback information and/or the first feedback information based on the first consistency information.

29. The CSI processing apparatus according to claim 28, wherein the determination module is specifically configured to at least one of the following:
determine whether the CSI feedback information comprises the first CSI and/or the second CSI based on the first consistency information, wherein the first CSI is obtained by processing the channel related information using a third manner.

30. The CSI processing apparatus according to claim 29, wherein the determination module is specifically configured to:

in a case where a first condition is met, determine that the CSI feedback information comprises the second CSI, wherein the first condition comprises at least that: a value of the first consistency information belongs to a first range; or

in a case where a second condition is met, determine that the CSI feedback information comprises the first CSI, wherein the second condition comprises at least that: a value of the first consistency information belongs to a second range; or

in a case where a third condition is met, determine that the CSI feedback information comprises the first CSI and the second CSI, wherein the third condition comprises at least that: a value of the first consistency information belongs to a third range.

31. The CSI processing apparatus according to any one of claims 27-30, wherein the determination module is specifically configured to:

process the channel related information using a third manner to obtain the first CSI;

determine the first consistency information based on the channel related information and the first information;

determine the second consistency information based on the channel related information and the first CSI; and

determine the CSI feedback information and/or the first feedback information based on the first consistency information and the second consistency information.

32. The CSI processing apparatus according to claim 31, wherein the determination module is specifically configured to:

in a case where a fourth condition is met, determine that the CSI feedback information comprises the second CSI, wherein the fourth condition comprises at least that: the first consistency information and the second consistency information meet a first relative relationship; or

in a case where a fifth condition is met, determine that the CSI feedback information comprises the first CSI, wherein the fifth condition comprises at least that: the first consistency information and the second consistency information meet a second relative relationship; or

in a case where a sixth condition is met, determine that the CSI feedback information comprises the first CSI and the second CSI, wherein the sixth condition comprises at least that: the first consistency information and the second consistency information meet a third relative relationship.

33. The CSI processing apparatus according to claim 32, wherein the determination module is specifically configured to:

in a case where a first condition is met, determine that the first feedback information comprises information for indicating that the CSI feedback information is obtained based on the first manner, wherein the first condition comprises at least that: a value of the first consistency information belongs to a first range; or

in a case where a second condition is met, determine that the first feedback information comprises information for indicating that the CSI feedback information is obtained based on the third manner, wherein the second condition comprises at least that: a value of the first consistency information belongs to a second range; or

in a case where a third condition is met, determine that the first feedback information comprises information for indicating that the CSI feedback information is obtained based on the first manner and the third manner, wherein the third condition comprises at least that: a value of the first consistency information belongs to a second range; or

in a case where a fourth condition is met, determine that the first feedback information comprises information for indicating that the CSI feedback information is obtained based on the first manner, wherein the fourth condition comprises at least that: the first consistency information and the second consistency information meet the first relative relationship; or

in a case where a fifth condition is met, determine that the first feedback information comprises information for indicating that the CSI feedback information is obtained based on the third manner, wherein the fifth condition comprises at least that: the first consistency information and the second consistency information meet the second relative relationship; or

in a case where a sixth condition is met, determine that the first feedback information comprises information for indicating that the CSI feedback information is obtained based on the first manner and the third manner, wherein the sixth condition comprises at least that: the first consistency information and the second consistency information meet the third relative relationship.

34. The CSI processing apparatus according to any one of claims 24-33, wherein the CSI processing apparatus comprises: a determination module, configured to determine whether to send the CSI feedback information based on the first consistency information and/or the second consistency information.

35. The CSI processing apparatus according to claim 34, wherein the determination module is further configured to: in a case where a seventh condition is met and/or an eighth condition is met, not send the CSI feedback information, wherein the seventh condition comprises at least that: the value of the first consistency information belongs to a fourth range, and the eighth condition comprises at least that: the first consistency information and the second consistency information meet a fourth relative relationship.

36. The CSI processing apparatus according to any one of claims 23-33, wherein the first consistency information comprises: first similarity information and/or first error information; and the second consistency information comprises: second similarity information and/or second error information.

37. A channel state information CSI processing apparatus, applied to a network device, the CSI processing apparatus comprises:

a sending module, configured to send a CSI feedback indication to a terminal; and
an acquisition module, configured to obtain first feedback information corresponding to the CSI feedback indication, wherein the first feedback information comprises at least one of the following:

information for indicating an acquisition manner of CSI feedback information; or
information for indicating accuracy of CSI feedback information; or
information for indicating first consistency information between channel related information and first information; or
information for indicating second consistency information between channel related information and first CSI; or
information for indicating whether CSI feedback information is transmitted.

38. The CSI processing apparatus according to claim 37, wherein the CSI processing apparatus further comprises: a receiving module or a first determination module, the receiving module is configured to receive the CSI feedback information, wherein the acquisition manner of the CSI feedback information corresponds to an acquisition manner of CSI feedback information indicated by the first feedback information; and the first determination module is configured to determine based on the first feedback information, whether to receive the CSI feedback information.

39. The CSI processing apparatus according to claim 37 or 38, wherein the CSI processing apparatus further comprises a second determination module, configured to determine CSI based on the CSI feedback information and/or the first feedback information.

40. The CSI processing apparatus according to claim 39, wherein the CSI feedback information is determined based on the channel related information and/or the first information, wherein the first information is obtained by processing second CSI using a second manner corresponding to a first manner, and the second CSI is obtained by processing the channel related information using the first manner.

41. The CSI processing apparatus according to claim 39, wherein the CSI processing apparatus comprises: a first determination module, configured to determine to receive the CSI feedback information in a case where the first feedback information indicates that the CSI feedback information is transmitted, and/or accuracy of the CSI feedback information indicated by the first feedback information meets a ninth condition, wherein the ninth condition comprises at least that: the accuracy is first accuracy and/or second accuracy; or determine not to receive the CSI feedback information in a case where the first feedback information indicates that the CSI feedback information is not transmitted, and/or accuracy of the CSI feedback information indicated by the first feedback information meets a tenth condition, wherein the tenth condition comprises at least that: the accuracy is third accuracy.

42. The CSI processing apparatus according to any one of claims 39-41, wherein the second determination module is specifically configured to: determine the acquisition manner of the CSI feedback information based on the first feedback information; and obtain the CSI using a manner corresponding to the acquisition manner.

43. The CSI processing apparatus according to any one of claims 39-41, wherein the second determination module is specifically configured to:

obtain the accuracy of the CSI feedback information based on the first feedback information;
determine the CSI based on the accuracy using at least one of the following manners:

in a case where the accuracy is first accuracy, analyze the CSI feedback information to obtain the CSI; or
in a case where the accuracy is second accuracy, analyze the CSI feedback information and calibrate at least a portion of information in an analysis result to obtain the CSI; or
in a case where the accuracy is third accuracy, not analyze the CSI feedback information to obtain the CSI.

44. The CSI processing apparatus according to any one of claims 39-41, wherein the second determination module is specifically configured to:

determine the first consistency information and/or the second consistency information based on the first feedback information;
determine the acquisition manner of the CSI feedback information based on the first consistency information and/or the second consistency information; and
obtain the CSI using a manner corresponding to the acquisition manner.

45. A terminal, comprising:

a memory, configured to store a computer program;
a transceiver, configured to transmit and receive data under the control of a processor; and
the processor, configured to read a computer program from the memory and perform the following operations:
in response to receiving a CSI feedback indication sent by a network device, sending first feedback information to the network device; wherein the first feedback information comprises at least one of the following:

information for indicating an acquisition manner of the CSI feedback information; or
information for indicating accuracy of CSI feedback information; or
information for indicating first consistency information between channel related information and first information; or
information for indicating second consistency information between channel related information and first CSI; or
information for indicating whether CSI feedback information is transmitted.

46. The terminal according to claim 45, wherein the processor is further configured to:
determine the first feedback information based on at least one of the CSI feedback information, the acquisition manner of the CSI feedback information, the accuracy of the CSI feedback information, the first consistency information, the second consistency information, and whether the CSI feedback information is transmitted.

47. The terminal according to claim 45, further comprising: send the CSI feedback information to the network device.

48. The terminal according to any one of claims 45-47, wherein the processor is further configured to: determine second CSI based on the channel related information; and evaluate the second CSI to obtain the CSI feedback information and/or the first feedback information.

49. The terminal according to claim 48, wherein determining the second CSI based on the channel related information comprises:

processing the channel related information using a first manner to obtain the second CSI;
evaluating the second CSI to obtain the CSI feedback information and/or the first feedback information comprises:

processing the second CSI based on a second manner corresponding to the first manner to obtain the first information; and
determining the CSI feedback information and/or the first feedback information based on the channel related information and/or the first information.

50. The terminal according to claim 49, wherein the determining the CSI feedback information and/or the first feedback information based on the channel related information and/or the first information comprises: determining the first consistency information based on the channel related information and the first information; and determining the CSI feedback information and/or the first feedback information based on the first consistency information.

51. The terminal according to claim 50, wherein determining the CSI feedback information based on the first consistency information comprises:
determining whether the CSI feedback information comprises the first CSI and/or the second CSI based on the first consistency information, wherein the first CSI is obtained by processing the channel related information using a third manner.

52. The terminal according to claim 51, wherein the determining whether the CSI feedback information comprises the first CSI and/or the second CSI based on the first consistency information comprises at least one of the following:

in a case where a first condition is met, determining that the CSI feedback information comprises the second CSI, wherein the first condition comprises at least that: a value of the first consistency information belongs to a first range; or
in a case where a second condition is met, determining that the CSI feedback information comprises the first CSI, wherein the second condition comprises at least that: a value of the first consistency information belongs to a second range; or
in a case where a third condition is met, determining that the CSI feedback information comprises the first CSI and the second CSI, wherein the third condition comprises at least that: a value of the first consistency information belongs to a third range.

53. The terminal according to any one of claims 49-52, wherein the determining the CSI feedback information and/or the first feedback information based on the channel related information and/or the first information comprises:
processing the channel related information using a third manner to obtain the first CSI; obtaining the first consistency information between the channel related information and the first information; obtaining the second consistency information between the channel related information and the first CSI; and determining the CSI feedback information and/or the first feedback information based on the first consistency information and the second consistency information.

54. The terminal according to claim 53, wherein determining the CSI feedback information based on the first consistency information and the second consistency information comprises at least one of the followings:

in a case where a fourth condition is met, determining that the CSI feedback information comprises the second CSI, wherein the fourth condition comprises at least that: the first consistency information and the second consistency information meet a first relative relationship; or
in a case where a fifth condition is met, determining that the CSI feedback information comprises the first CSI, wherein the fifth condition comprises at least that: the first consistency information and the second consistency information meet a second relative relationship; or
in a case where a sixth condition is met, determining that the CSI feedback information comprises the first CSI and the second CSI, wherein the sixth condition comprises at least that: the first consistency information and the second consistency information meet a third relative relationship.

55. The terminal according to claim 54, wherein the processor is specifically configured to:

in a case where a first condition is met, determine that the first feedback information comprises information for indicating that the CSI feedback information is obtained using the first manner, wherein the first condition comprises at least that: a value of the first consistency information belongs to a first range; or
in a case where a second condition is met, determine that the first feedback information comprises information for indicating that the CSI feedback information is obtained using the third manner, wherein the second condition comprises at least that: a value of the first consistency information belongs to a second range; or
in a case where a third condition is met, determine that the first feedback information comprises information for indicating that the CSI feedback information is obtained using the first manner and the third manner, wherein the third condition comprises at least that: a value of the first consistency information belongs to a second range; or
in a case where a fourth condition is met, determine that the first feedback information comprises information for indicating that the CSI feedback information is obtained using the first manner, wherein the fourth condition comprises at least that: the first consistency information and the second consistency information meet the first relative relationship; or

in a case where a fifth condition is met, determine that the first feedback information comprises information for indicating that the CSI feedback information is obtained using the third manner, wherein the fifth condition comprises at least that: the first consistency information and the second consistency information meet the second relative relationship; or

in a case where a sixth condition is met, determine that the first feedback information comprises information for indicating that the CSI feedback information is obtained using the first manner and the third manner, wherein the sixth condition comprises at least that: the first consistency information and the second consistency information meet the third relative relationship.

56. The terminal according to any one of claims 45-55, wherein the processor is further configured to: determine whether to send the CSI feedback information based on the first consistency information and/or the second consistency information.

57. The terminal according to claim 56, wherein determining whether to send the CSI feedback information based on the first consistency information and/or the second consistency information comprises:
in a case where a seventh condition is met and/or an eighth condition is met, not sending the CSI feedback information, wherein seventh condition comprises at least that: the value of the first consistency information belongs to a fourth range, and the eighth condition comprises at least that: the first consistency information and the second consistency information meet a fourth relative relationship.

58. The terminal according to any one of claims 45-55, wherein the first consistency information comprises: first similarity information and/or first error information; and the second consistency information comprises: second similarity information and/or second error information.

59. A network device, comprising:

a memory, configured to store a computer program;
a transceiver, configured to transmit and receive data under the control of a processor; and
the processor, configured to read a computer program from the memory and perform the following operations:
sending a CSI feedback indication to a terminal; obtaining first feedback information corresponding to the CSI feedback indication, wherein the first feedback information comprises at least one of the following:

information for indicating an acquisition manner of CSI feedback information; or
information for indicating accuracy of CSI feedback information; or
information for indicating first consistency information between channel related information and first information; or
information for indicating second consistency information between channel related information and first CSI; or
information for indicating whether CSI feedback information is transmitted.

60. The network device according to claim 59, wherein the processor is further configured to: receive the CSI feedback information, wherein the acquisition manner of the CSI feedback information corresponds to an acquisition manner of CSI feedback information indicated by the first feedback information; or determine, based on the first feedback information, whether to receive the CSI feedback information.

61. The network device according to claim 59 or 60, wherein the processor is further configured to: determine CSI based on the CSI feedback information and/or the first feedback information.

62. The network device according to claim 61, wherein the CSI feedback information is determined based on channel related information and/or first information, wherein the first information is obtained by processing second CSI using a second manner corresponding to the first manner, and the second CSI is obtained by processing the channel related information using the first manner.

63. The network device according to claim 61, wherein determining, based on the first feedback information, whether to receive the CSI feedback information comprises at least one of the following:

in a case where the first feedback information indicates that the CSI feedback information is transmitted, and/or accuracy of the CSI feedback information indicated by the first feedback information meets a ninth condition, determining to receive the CSI feedback information, wherein the ninth condition comprises at least that: the accuracy is first accuracy and/or second accuracy; or

in a case where the first feedback information indicates that the CSI feedback information is not transmitted, and/or accuracy of the CSI feedback information indicated by the first feedback information meets a tenth condition, determining not to receive the CSI feedback information, wherein the tenth condition comprises at least that: the accuracy is third accuracy.

64. The network device according to any one of claim 61-63, wherein determining the CSI based on the CSI feedback information and/or the first feedback information comprises: determine the acquisition manner of the CSI feedback information based on the first feedback information; and obtaining the CSI using a manner corresponding to the acquisition manner.

65. The network device according to any one of claim 61-63, wherein determining CSI based on the CSI feedback information and/or the first feedback information comprises:

obtaining the accuracy of the CSI feedback information based on the first feedback information;
determining the CSI based on the accuracy using at least one of the following manners:

in a case where the accuracy is the accuracy, analyze the CSI feedback information to obtain the CSI; or
in a case where the accuracy is second accuracy, analyze the CSI feedback information and calibrate at least a portion of information in an analysis result to obtain the CSI; or
in a case where the accuracy is third accuracy, not analyze the CSI feedback information to obtain the CSI.

66. The network device according to any one of claim 61-63, wherein determining the CSI based on the CSI feedback information and/or the first feedback information comprises:
determining the first consistency information and/or the second consistency information based on the first feedback information; determining the acquisition manner of the CSI feedback information based on the first consistency information and/or the second consistency information; and obtaining the CSI using a manner corresponding to the acquisition manner.

67. A processor readable storage medium, wherein the processor readable storage medium stores a computer program, the computer program is configured to enable the processor to execute the CSI processing method according to any one of claims 1-22.

68. A computer program product, comprising: a computer program, the computer program, when executed by a processor, implements the CSI processing method according to any one of claims 1-22.

FIG. 1

FIG. 2

FIG. 3

```
┌─────────────────┐                           ┌─────────────────┐
│ Network device  │                           │    Terminal     │
└────────┬────────┘                           └────────┬────────┘
         │                                             │
         │       S401, sending a CSI feedback indication │
         │ ─────────────────────────────────────────────▶│
         │                                  ┌────────────┴──────────────┐
         │                                  │ S402, in response to receiving the CSI │
         │                                  │ feedback indication sent by the network │
         │                                  │ device, determining the first CSI based on │
         │                                  │ the channel related information │
         │                                  └────────────┬──────────────┘
         │                                  ┌────────────┴──────────────┐
         │                                  │ S403, evaluating the first CSI to obtain the │
         │                                  │ CSI feedback information and/or the first │
         │                                  │ feedback information │
         │                                  └────────────┬──────────────┘
         │   S404, sending the CSI feedback information  │
         │        and/or the first feedback information  │
         │◀──────────────────────────────────────────────│
┌────────┴──────────────┐                               │
│ S405, determining the CSI based on the │              │
│ CSI feedback information and/or the first │            │
│ feedback information │                                 │
└────────┬──────────────┘                               │
         │                                               │
```

FIG. 4

```
┌─────────────────────────────────────────────────────────┐
│ Processing channel related information using a first      │ ⟋ S501
│ manner to obtain a second CSI                             │
└───────────────────────────┬─────────────────────────────┘
                            │
                            ▼
┌─────────────────────────────────────────────────────────┐
│ Processing the second CSI using a second manner           │ ⟋ S502
│ corresponding to the first manner to obtain the first     │
│ information                                               │
└───────────────────────────┬─────────────────────────────┘
                            │
                            ▼
┌─────────────────────────────────────────────────────────┐
│ Determining the CSI feedback information and/or the first │ ⟋ S503
│ feedback information based on the channel related         │
│ information and/or the first information                  │
└─────────────────────────────────────────────────────────┘
```

FIG. 5

Evaluate

Channel related information → First manner —Second CSI→ Second manner → First information → First consistency information

FIG. 6(a)

Evaluate

Channel related information → First manner —Second CSI→ Second manner → First information → First consistency information

Third manner —First CSI→ Second consistency information

Evaluate

FIG. 6(b)

Processing the channel related information using a third manner to obtain the first CSI — S701

Obtaining the first consistency information based on the channel related information and the first information — S702

Obtaining the second consistency information based on the channel related information and the first CSI — S703

Determining the CSI feedback information and/or the first feedback information based on the first consistency information and the second consistency information — S704

FIG. 7

Network device | Terminal

S801, sending the CSI feedback indication

S802, in response to receiving the CSI feedback indication sent by the network device, determining the first CSI based on the channel related information

S803, evaluating the first CSI to obtain the CSI feedback information and the first feedback information

S804, sending the first feedback information

Sending the CSI feedback information

S805, determining whether to receive the CSI feedback information based on the first feedback information

S806, when determining to receive the CSI feedback information, receiving the CSI feedback information, and determining the CSI based on the CSI feedback information and/or the first feedback information

FIG. 8

Sending module 901

Determination module 902

CSI processing apparatus 900

FIG. 9

Sending module 1001

Acquisition module 1002

Receiving module 1003

First determination module 1004

Second determination module 1005

CSI processing apparatus 1000

FIG. 10

1102
Processor

1103
Memory

Bus interface

1101
Transceiver

FIG. 11

1202
Processor

1203
Memory

Bus interface

1201
Transceiver

FIG. 12

## INTERNATIONAL SEARCH REPORT

| International application No. |
| --- |
| **PCT/CN2023/087097** |

**A. CLASSIFICATION OF SUBJECT MATTER**

H04B7/0413(2017.01)i;  H04B7/024(2017.01)i

According to International Patent Classification (IPC) or to both national classification and IPC

**B. FIELDS SEARCHED**

Minimum documentation searched (classification system followed by classification symbols)

IPC: H04B, H04W

Documentation searched other than minimum documentation to the extent that such documents are included in the fields searched

Electronic data base consulted during the international search (name of data base and, where practicable, search terms used)

CNABS, CNTXT, VEN, DWPI, EXTXTC, WOTXT, USTXT, 3GPP: 信道状态信息, 上传, 报告, 反馈, 类型, 模式, 方式, 准确, 正确, 一致, CSI, channel state information, report+, feedback+, type, mode?, accuracy, correct, consistent

**C. DOCUMENTS CONSIDERED TO BE RELEVANT**

| Category* | Citation of document, with indication, where appropriate, of the relevant passages | Relevant to claim No. |
| --- | --- | --- |
| X | WO 2021046783 A1 (ALCATEL-LUCENT SHANGHAI BELL CO., LTD. et al.) 18 March 2021 (2021-03-18)<br>description, paragraphs 159-198 | 1-3, 15-17, 23-25, 37-39, 45-47, 59-61, 67, 68 |
| A | WO 2021046783 A1 (ALCATEL-LUCENT SHANGHAI BELL CO., LTD. et al.) 18 March 2021 (2021-03-18)<br>entire document | 4-14, 18-22, 26-36, 40-44, 48-58, 62-66 |
| X | CN 107078772 A (TELEFONAKTIEBOLAGET LM ERICSSON (PUBL)) 18 August 2017 (2017-08-18)<br>description, paragraphs 122-130 and 160 | 1-3, 15-17, 23-25, 37-39, 45-47, 59-61, 67, 68 |
| A | CN 107078772 A (TELEFONAKTIEBOLAGET LM ERICSSON (PUBL)) 18 August 2017 (2017-08-18)<br>entire document | 4-14, 18-22, 26-36, 40-44, 48-58, 62-66 |
| X | WO 2018028687 A1 (HUAWEI TECHNOLOGIES CO., LTD.) 15 February 2018 (2018-02-15)<br>description, paragraphs 99-117 and 227-263 | 1-3, 15-17, 23-25, 37-39, 45-47, 59-61, 67, 68 |

☑ Further documents are listed in the continuation of Box C.    ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **07 August 2023** | **08 August 2023** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

International application No.

**PCT/CN2023/087097**

**C.    DOCUMENTS CONSIDERED TO BE RELEVANT**

| Category* | Citation of document, with indication, where appropriate, of the relevant passages | Relevant to claim No. |
|---|---|---|
| A | WO 2018028687 A1 (HUAWEI TECHNOLOGIES CO., LTD.) 15 February 2018 (2018-02-15)<br>entire document | 4-14, 18-22, 26-36, 40-44, 48-58, 62-66 |
| X | HUAWEI; HISILICON. "R1-121946 "CSI feedback modes for CoMP""<br>*3GPP TSG RAN WG1 Meeting #69,* No. TSGR1_69, 12 May 2012 (2012-05-12),<br>sections 3 and 4 | 1-3, 15-17, 23-25, 37-39, 45-47, 59-61, 67, 68 |

**EP 4 507 208 A1**

INTERNATIONAL SEARCH REPORT
Information on patent family members

International application No.

**PCT/CN2023/087097**

| Patent document cited in search report | | | Publication date (day/month/year) | Patent family member(s) | | | Publication date (day/month/year) |
|---|---|---|---|---|---|---|---|
| WO | 2021046783 | A1 | 18 March 2021 | CN | 114342281 | A | 12 April 2022 |
| CN | 107078772 | A | 18 August 2017 | US | 2017338876 | A1 | 23 November 2017 |
| | | | | WO | 2016064318 | A1 | 28 April 2016 |
| | | | | EP | 3210314 | A1 | 30 August 2017 |
| | | | | EP | 3210314 | B1 | 12 February 2020 |
| | | | | IN | 201737013941 | A | 25 August 2017 |
| | | | | CN | 107078772 | B | 27 November 2020 |
| | | | | IN | 402329 | B | 05 August 2022 |
| WO | 2018028687 | A1 | 15 February 2018 | CN | 107743042 | A | 27 February 2018 |
| | | | | VN | 63567 | A | 27 May 2019 |
| | | | | US | 2019173549 | A1 | 06 June 2019 |
| | | | | EP | 3496288 | A1 | 12 June 2019 |
| | | | | EP | 3496288 | A4 | 17 July 2019 |

Form PCT/ISA/210 (patent family annex) (July 2022)

**REFERENCES CITED IN THE DESCRIPTION**

**Patent documents cited in the description**

- CN 202210366590